# EUROPEAN PATENT APPLICATION

(11) **EP 4 770 058 A1**
(43) Date of publication of application: **01.07.2026**
(21) Application number: 23949461.0
(22) Date of filing: 24.08.2023
(51) Int. Cl.: H04L 69/04

(54) **METHOD FOR MODEL TRANSMISSION, AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: WU, Hao, Dongguan, Guangdong 523860 (CN); SHI, Cong, Dongguan, Guangdong 523860 (CN); FAN, Jiangsheng, Dongguan, Guangdong 523860 (CN); LIN, Xue, Dongguan, Guangdong 523860 (CN)
(74) Representative: Taor, Simon Edward William
(86) International application number: PCT/CN2023/114802
(87) International publication number: WO 2025/039276

(57) **Abstract**

A method for model transmission and a communication device are provided. The method includes the following. A first device receives model information of a first model sent by a second device, where the model information of the first model includes one or more of: some or all model parameters of the first model, first information used for determining a model structure of the first model, second information associated with a compiling format for the first model, and third information associated with compression of the first model. In embodiments of the present disclosure, the second device can transmit the first model by sending the model information of the first model to the first device. Compared with a conventional model transmission scheme that requires sending all model data of the first model, this method can reduce the data volume of model information required to be transmitted in a model transmission process, thereby shortening the transmission time required for the model transmission process.

## Description

### TECHNICAL FIELD

This disclosure relates to the field of communication technology, in particular to a method for model transmission and a communication device.

### BACKGROUND

In many scenarios, model transmission is required between a first device and a second device. Especially in some scenarios, the first device may urgently require a model to ensure communication continuity. Therefore, model transmission becomes critically important. In a conventional model transmission scheme, the second device transmits a model as a whole to the first device. However, with this model transmission scheme, the data volume of model information to be transmitted is large, resulting in a long time required for model transmission.

### SUMMARY

A method for model transmission and a communication device are provided in the present disclosure. Various aspects of the present disclosure will be introduced below.

In a first aspect, a method for model transmission is provided. The method includes the following. A first device receives model information of a first model sent by a second device, where the model information of the first model includes one or more of: some or all model parameters of the first model, first information used for determining a model structure of the first model, second information associated with a compiling format for the first model, and third information associated with compression of the first model.

In a second aspect, a method for model transmission is provided. The method includes the following. A second device sends model information of a first model to a first device, where the model information of the first model includes one or more of: some or all model parameters of the first model, first information used for determining a model structure of the first model, second information associated with a compiling format for the first model, and third information associated with compression of the first model.

In a third aspect, a communication device is provided. The communication device is a first device, and the communication device includes a receiving unit. The receiving unit is configured to receive model information of a first model sent by a second device, where the model information of the first model includes one or more of: some or all model parameters of the first model, first information used for determining a model structure of the first model, second information associated with a compiling format for the first model, and third information associated with compression of the first model.

In a fourth aspect, a communication device is provided. The communication device is a second device, and the communication device includes a sending unit. The sending unit is configured to send model information of a first model to a first device, where the model information of the first model includes one or more of: some or all model parameters of the first model, first information used for determining a model structure of the first model, second information associated with a compiling format for the first model, and third information associated with compression of the first model.

In a fifth aspect, a communication device is provided. The communication device includes a processor, a memory, and a communication interface. The memory is configured to store one or more computer programs. The processor is configured to invoke the one or more computer programs stored in the memory, to cause the communication device to perform some or all operations of the method in various aspects mentioned above.

In a sixth aspect, a communication system is provided in the present disclosure. The communication system includes the terminal device and/or the network device. In another possible design, the system may further include other devices that interact with the first device or the second device in solutions provided in embodiments of the present disclosure.

In a seventh aspect, a computer-readable storage medium is provided in embodiments of the present disclosure. The computer-readable storage medium is configured to store a computer program that causes a communication device (e.g., a first device or a second device) to perform some or all operations of the method in various aspects mentioned above.

In an eighth aspect, a computer program product is provided in embodiments of the present disclosure. The computer program product includes a non-transitory computer-readable storage medium storing a computer program, and the computer program is operable with a communication device (e.g., a first device or a second device) to perform some or all operations of the method in various aspects mentioned above. In some implementations, the computer program product may be a software installation package.

In a ninth aspect, a chip is provided in embodiments of the present disclosure. The chip includes a memory and a processor. The processor is configured to invoke and execute a computer program stored in the memory, to implement some or all operations of the method in various aspects mentioned above.

In embodiments of the present disclosure, the second device can transmit the first model by sending the model information of the first model to the first device. Compared with a conventional model transmission scheme that requires sending all model data of the first model, the model information of the first model is configured, which is conducive to reducing the data volume of model information to be transmitted in a model transmission process, thereby shortening the transmission time required for the model transmission process.

### BRIEF DESCRIPTION OF THE DRAWINGS

FIG. 1 illustrates a wireless communication system 100 to which embodiments of the present disclosure are applicable.
FIG. 2 is a schematic diagram illustrating a neural network to which embodiments of the present disclosure are applicable.
FIG. 3 is a schematic diagram illustrating another neural network to which embodiments of the present disclosure are applicable.
FIG. 4 is a schematic flowchart illustrating a method for model transmission according to embodiments of the present disclosure.
FIG. 5 is a schematic flowchart illustrating a method for model transmission according to other embodiments of the present disclosure.
FIG. 6 is a schematic diagram of a communication device according to embodiments of the present disclosure.
FIG. 7 is a schematic diagram of a communication device according to other embodiments of the present disclosure.
FIG. 8 is a schematic structural diagram of a communication apparatus according to embodiments of the present disclosure.

### DETAILED DESCRIPTION

Technical solutions of the present disclosure will be elaborated below with reference to accompanying drawings.

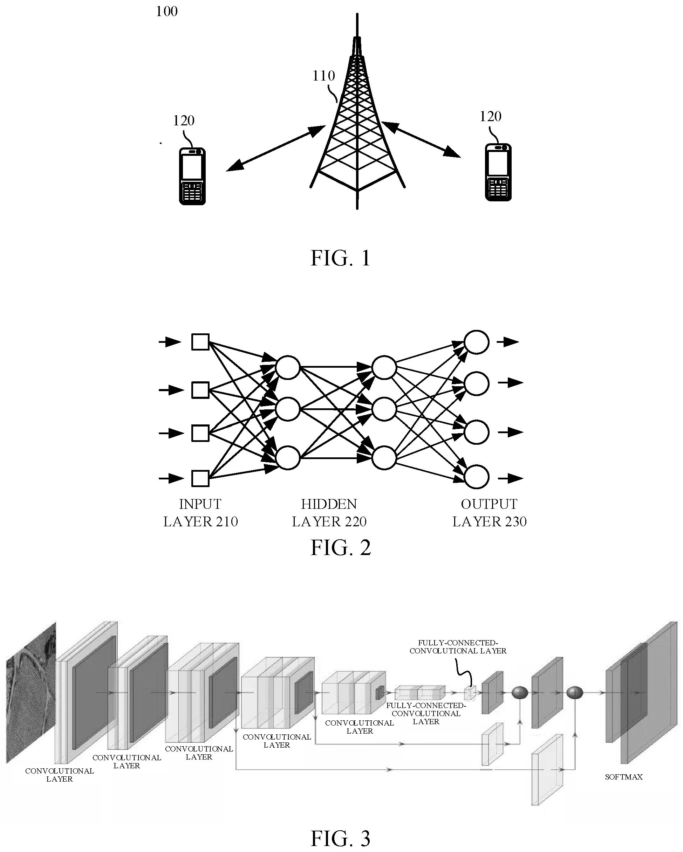

FIG. 1 illustrates a wireless communication system 100 to which embodiments of the present disclosure are applicable. The wireless communication system 100 may include a network device 110 and a terminal device 120. The network device 110 may be a device that communicates with the terminal device 120. The network device 110 can provide a communication coverage for a specific geographical area and communicate with a terminal device(s) 120 in the coverage area.

FIG. 1 exemplarily illustrates one network device and two terminals. Optionally, the wireless communication system 100 may also include multiple network devices, and there may be other numbers (quantities) of terminal devices in a coverage area of each network device, which is not limited in embodiments of the present disclosure.

Optionally, the wireless communication system 100 may further include other network entities such as a network controller, a mobility management entity (MME), etc., which is not limited in embodiments of the present embodiment.

It may be understood that, the technical solutions of embodiments of the present disclosure are applicable to various communication systems, such as: a 5th generation (5G) system or a new radio (NR) system, a long-term evolution (LTE) system, an LTE frequency division duplex (FDD) system, an LTE time division duplex (TDD) system, etc. The technical solutions provided in the present disclosure are also applicable to future communication systems, such as a sixth-generation (6G) mobile communication system, a satellite communication system, etc.

The terminal device in embodiments of the present disclosure may also be referred to as a user equipment (UE), an access terminal, a subscriber unit, a subscriber station, a mobile station (MS), a mobile terminal (MT), a remote station, a remote terminal, a mobile device, a user terminal, a terminal, a wireless communication device, a user agent, a user apparatus, etc. The terminal device in embodiments of the present disclosure may be a device that provides voice and/or data connectivity to a user and is capable of connecting people, objects, and machines, such as a handheld device with a wireless connection function, a vehicle-in device, etc. The terminal device in embodiments of the present disclosure may be a mobile phone, a pad, a laptop computer, a tablet computer, a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. Optionally, the UE may be used to act as a base station. For example, the UE may act as a scheduling entity that provides a sidelink signal between UEs in vehicle-to-everything (V2X), device-to-device (D2D), etc. For example, a cellular phone and a vehicle communicate with each other by using a sidelink signal. A cellular phone and a smart home device communicate with each other, without relaying a communication signal by using a base station.

The network device in embodiments of the present disclosure may be a device that can communicate with the terminal device, and the network device may also be referred to as an access network (AN) device or a radio access network (RAN) device. For example, the network device may be a base station. The network device in embodiments of the present disclosure may refer to an RAN node (or device) that connects the terminal device to a wireless network. The base station may broadly cover various names in the following, or may be interchangeable with one of the following names, for example, an NodeB, an evolved NodeB (eNB), a next generation NodeB (gNB), a relay station, an access point, a transmission reception point (TRP), a transmitting point (TP), a master MeNB, a secondary SeNB, a multi-standard radio (MSR) node, a home base station, a network controller, an access node, a radio node, an access point (AP), a transmission node, a transceiver node, a baseband unit (BBU), a remote radio unit (RRU), an active antenna unit (AAU), a remote radio head (RRH), a central unit (CU), a distributed unit (DU), a positioning node, etc. The base station may be a macro base station, a micro base station, a relay node, a donor node, etc., or a combination thereof. The base station may also refer to a communication module, a modem, or a chip that is configured inside the device or the apparatus. The base station may also be a mobile switching center, a device acting as a base station in D2D communication, V2X communication, or machine-to-machine (M2M) communication, a network-side device in a 6G network, a device acting as a base station in a future communication system, etc. The base station may support networks of the same or different access technologies, and there is no limitation on specific technology and specific device form adopted by the network device in embodiments of the present disclosure.

The base station may be fixed or mobile. For example, a helicopter or an unmanned aerial vehicle may be configured to act as a mobile base station, and one or more cells may move depending on a position of the mobile base station. In other examples, a helicopter or an unmanned aerial vehicle may be configured to serve as a device in communication with another network device.

In some deployments, the network device in embodiments of the present disclosure may be a CU or a DU, or the network device may include a CU and a DU. The gNB may also include an AAU.

The network device and the terminal device may be deployed on land, which includes indoor or outdoor, handheld, wearable, or in-vehicle, may be deployed on water, or may be deployed in the air, such as airplanes, balloons, satellites, etc. The scenarios in which the network device and the terminal device are positioned are not limited in embodiments of the present disclosure.

It may be understood that, all or some of the functions of the communication device in the present disclosure may also be implemented by software functions running on hardware, or by virtualization functions implemented on a platform (e.g., a cloud platform).

### Artificial Intelligence (AI) Model

In recent years, AI research represented by a neural network has made great achievements in many fields, and will play a vital role in people's production and life for a long time in the future. A neural network, as a kind of AI model, may be understood as an operation model including multiple neuron nodes that are connected with one another, where a connection between nodes may represent a weighted value from an input signal to an output signal, generally referred to as "model parameter". For each node, weighted summation is performed on different input signals, and the signals are output by using a specific activation function

Common neural networks include a convolutional neural network (CNN), a recurrent neural network (RNN), and a deep neural network (DNN), etc.

With reference to FIG. 2, the following describes a neural network to which embodiments of the present disclosure are applicable. Layers of the neural network as illustrated in FIG. 2 may be classified into three types according to positions of different layers: an input layer 210, a hidden layer 220, and an output layer 230. Generally, the first layer is the input layer 210, the last layer is the output layer 230, and the middle layer(s) between the first layer and the last layer is the hidden layer 220.

The input layer 210 is configured to input data. The input data may be, for example, a received signal received by a receiver. The hidden layer 220 is configured to process the input data, for example, perform decompression processing on a received signal. The output layer 230 is configured to output processed output data, for example, to output a decompressed signal.

As illustrated in FIG. 2, the neural network includes multiple layers, and each layer includes multiple neurons. Neurons between the layers may be fully connected, or may be partially connected. For connected neurons, an output of neurons of a preceding layer may be used as an input of neurons of a subsequent layer.

With the continuous development of neural network research, neural network deep learning algorithms have been proposed in recent years. A large number of hidden layers is introduced into a neural network to form a DNN. More hidden layers enable the DNN to better describe a complex situation in the real world. In theory, a model with a large number of model parameters has high complexity and large "capacity", which means that the model can complete more complex learning tasks. This neural network model is widely used in pattern recognition, signal processing, optimization combination, anomaly detection, etc.

As illustrated in FIG. 3, a structure of a common neural network model may include convolutional layers (denoted as *"conv"),* fully-connected layers (denoted as *"fc"),* and a softmax layer(s). In some implementations, the neural network model may also include a pooling layer(s). Each layer can be regarded as a model module.

Each convolutional layer may include multiple convolutional operators, and a convolutional operator is also referred to as a kernel. A function of the convolutional operator may be considered as a filter for extracting specific information from an input signal. The convolutional operator may essentially be a parameter matrix that is typically pre-defined.

Parameter values in these parameter matrices are obtained through a large amount of training in an actual application. Information can be extracted from an input signal through each parameter matrix formed by the parameter values obtained through training, to assist the CNN in performing correct prediction.

When a CNN has multiple convolutional layers, typically, more general features can be extracted from an initial convolutional layer, and the general features may also be referred to as "lower-level features". As the depth of the CNN increases, features extracted from subsequent convolutional layers are increasingly complex.

Regarding the pooling layer, as the number of training parameters often needs to be reduced, a pooling layer often needs to be periodically introduced behind a convolutional layer. For example, as illustrated in FIG. 3, one convolutional layer may be followed by one pooling layer, or multiple convolutional layers may be followed by one or more pooling layers. In a signal processing process, the only purpose of the pooling layer is to reduce the size of space occupied by extracted information.

Regarding the fully-connected layer, after processing of the convolutional layer(s) and the pooling layer(s), it is still insufficient for the CNN to output required output information. As mentioned above, in the convolutional layer and the pooling layer, only features can be extracted, and parameters brought by the input data can be reduced. In order to generate final output information (e.g., a bitstream of original information transmitted by a transmitting end), the fully-connected layer needs to be utilized for the CNN. Generally, the fully-connected layer may include multiple hidden layers. Parameters included in the multiple hidden layers may be obtained by performing pre-training according to related training data of a specific task type. For example, the task type may include decoding a data signal received by a receiver. For another example, the task type may include performing channel estimation based on a pilot signal received by the receiver.

A layer behind the multiple hidden layers in the fully-connected layer, i.e., the last layer of the entire CNN, is an output layer that is configured to output a result. Generally, a loss function (e.g., a loss function similar to a classification cross entropy) is set for the output layer, to calculate a prediction error, or in other words, to evaluate a degree of difference between a result (also referred to as a predicted value) output by the CNN model and an ideal result (also referred to as a true value).

To minimize the loss function, the CNN model needs to be trained. In some implementations, the CNN model may be trained using a backpropagation algorithm (BP). A training process of the BP includes a forward propagation process and a backward propagation process. In the forward propagation process (as illustrated in FIG. 3, propagation from the input layer to the output layer is forward propagation), the input data is input into the foregoing layers of the CNN model, processed layer by layer, and transmitted to the output layer. If a difference between a result output at the output layer and an ideal result is large, the training process is switched from forward propagation to backward propagation (as illustrated in FIG. 3, propagation from the output layer to the input layer is backward propagation) with an optimization objective of minimizing the loss function. A partial derivative of each neuron weighted value with respect to the optimization objective is obtained layer by layer, to constitute a gradient of a weighted value vector with respect to the optimization objective, which is used as a basis for modifying a model parameter. Then, the training process of the CNN is implemented by a parameter modification process. When the error reaches an expected value, the training process of the CNN ends.

It may be noted that, the CNN as illustrated in FIG. 3 is merely an example of the CNN. In a specific application, the CNN may also in another form of network model, which is not limited in embodiments of the present disclosure.

An objective of an RNN is to process sequence data. In a conventional neural network model (e.g., a CNN model), different types of layers are fully connected from an input layer to a hidden layer and then to an output layer, but nodes of the same layer are not connected. This common neural network cannot resolve many problems. For example, to predict the next word in a sentence, words before this word are generally used because words in a sentence are not independent of each other. A reason why the RNN is named as a recurrent neural network is that a current output of a sequence is also related to a previous output, which is specifically characterized in that the network memorizes previous information and applies the information to calculation of a current output, that is, nodes of each hidden layer are no longer disconnected but connected with one another, and an input of a hidden layer includes not only an output of the input layer but also an output of the hidden layer at a previous time. Theoretically, the RNN can process sequence data of any length.

Training for the RNN is similar to that for a conventional ANN. A BP error backpropagation algorithm is also used, but there is a difference. If the RNN network is unfolded, parameters *W, U,* and *V* are shared, but this is not the case in a conventional neural network. In addition, in a gradient descent algorithm, an output of each step depends on not only a network of a current step, but also states of the network in previous several steps. For example, when *t*=4, the training process is transmitted backward by three steps with respective gradients being calculated. This learning algorithm is referred to as "backpropagation through time (BPTT)".

Since an ANN and a CNN already exist, why is a RNN required? The reason is quite simple. Prerequisite assumptions of the CNN and the ANN are both: elements are independent of each other, and an input and an output are also independent of each other, for example, a cat and a dog. However, in the real world, many elements are connected with each other. For example, stocks change with time. One person says, "I like to travel. Yunnan is my favorite place, and I will go to if I have time." Everyone shall know that "Yunnan" needs to be filled in the blank here, because this can be inferred from the context. However, it is difficult for a machine to do so. Consequently, a current RNN emerges. An essence of the RNN is to have the ability to remember like a human being. Therefore, an output of the RNN depends on a current input and a memory. The RNN may be explained in one sentence that a unit structure is repeatedly used.

### Model Segmentation

The AI model mentioned above is taken as an example. As illustrated in FIG. 2, a model can be composed of multiple layers, and each layer contains multiple nodes (e.g., neurons). The number, arrangement, and connection of the layers can be referred to as "model structure". Additionally, each node and edge in the model has a corresponding weight that is used for adjusting the processing capability of the model, and the weight is referred to as "model parameter". In other words, a model can be divided into two parts: model structure and model parameter.

In some implementations, considering the layers of the model structure, the model structure can be further divided into different modules. With reference to FIG. 2 again, each model module may include one or more layers of the model. A model module can be replaced as needed to achieve different model performance. Currently, for a common model such as a long short-term memory (LSTM) model, a transformer model, etc., a model module typically includes a fully-connected layer(s) and/or a convolutional layer(s), etc.

### Model Transmission

In some scenarios, a model can be transmitted between communication devices. For example, a model can be transmitted between communication devices via an air interface. Currently, seven manners of model transmission from a network device to a terminal device are defined in a communication protocol. The following describes model transmission manner 1 to model transmission manner 7. The network device may be any one of: an AN device, a core network (CN) device other than a position management function (LMF), an LMF, and a server, e.g., an over-the-top (OTT) server, an information management device, or an operation administration and maintenance (OAM) device.

Model transmission manner 1: an AN device transmits a model to a terminal device via a radio resource control (RRC) message.

Model transmission manner 2: a CN device (other than an LMF) transmits a model to a terminal device via non-access stratum (NAS) signaling.

Model transmission manner 3: an LMF transmits a model to a terminal device via a long-term evolution positioning protocol (LPP) message.

Model transmission manner 4: an AN device transmits a model to a terminal device over a user plane.

Model transmission manner 5: a CN device (other than an LMF) transmits a model to a terminal device over a user plane.

Model transmission manner 6: an LMF transmits a model to a terminal device over a user interface, where a message used for model transmission is not defined in the 3rd generation partnership project (3GPP).

Model transmission manner 7: a server transmits a model to a terminal device, where a message used for model transmission is not defined in the 3GPP.

In some implementations, the model can be identified by a model identifier (or referred to as "model ID"). In some implementations, different model IDs may be assigned to models with the same model structure due to differences in deployment position, application scenario, etc. Typically, a model ID can be understood by both a sending end and a receiving end in a communication system, i.e., both the sending end and the receiving end can determine a function(s), a structure, and a parameter(s) of a model based on its model ID.

In some implementations, if the model function(s) of the model cannot be obtained based on the model identifier, the model function(s) can be determined based on the model identifier and auxiliary meta information (denoted as "meta info").

In some other implementations, if model transmission is supported in the communication system, a model ID can be used for model lifecycle management.

Currently, application scenarios of a model are limited. Typically, the model is only applicable to a specific region (e.g., a single cell), and performance gains from model-based communication rely on training data associated with the specific region. In other words, the model is trained based on the training data associated with the specific region, and thus the model generally has a better performance when the model is used in the specific region. However, when the specific region changes or a service(s) to be transmitted changes, a first device needs to obtain a new model from a second device.

In embodiments of the present disclosure, the second device may be, for example, any network device mentioned above, and the first device may be a terminal device. Certainly, in embodiments of the present disclosure, both the first device and the second device may be terminal devices. Alternatively, the first device may be a network device, and the second device may be a terminal device. The following is given with an example that the first device is a terminal device and the second device is a network device.

A change in the specific region is taken as an example. In some scenarios, a terminal device is moving. When the terminal device moves from Cell 1 to Cell 2, i.e., when the specific region changes, a model corresponding to Cell 1 may no longer be applicable. In this case, the terminal device needs to obtain a model corresponding to Cell 2 from a network device for communication.

A change in the service(s) to be transmitted is taken as an example. In some scenarios, if a terminal device temporarily needs to perform beam management based on a model but lacks a model for beam management, a network device can send the model for beam management to the terminal device for the terminal device to perform beam management.

As can be seen from the above, model transmission is required between the first device and the second device in many scenarios. Especially in some scenarios, the first device may urgently require a model to ensure communication continuity. Therefore, model transmission becomes critically important. In a conventional model transmission scheme, the second device transmits a model as a whole to the first device. However, this model transmission scheme requires a long transmission time.

Therefore, to address this issue, a method for model transmission is provided in embodiments of the present disclosure. The method is conducive to reducing the data volume of model information required to be transmitted during transmission of a model (also referred to as "first model" below), thereby shortening the transmission time required for the model transmission process. Therefore, the model transmission process in embodiments of the present disclosure can also be referred to as "lightweight model transmission process".

In some scenarios, the lightweight model transmission process supports the application of a dedicated model, i.e., lightweight model transmission enables a more convenient model update. Correspondingly, model design can be more tailored for a specific scenario, and a model tailored for the specific scenario can achieve better performance in the specific scenario than a generic model.

In some other scenarios, the lightweight model transmission process avoids excessive consumption of resources on the first device. In other words, rapid model transmission can eliminate the need for the first device to store a large number of models, and the second device can dynamically perform model update for the first device in real time, thereby reducing hardware requirements for the first device and improving technical backward compatibility.

In some other scenarios, the lightweight model transmission process can enhance service continuity for mobile users. For example, when determining whether to perform cell handover based on a model and when the signal quality of a source serving cell drops below a specific threshold, a model update is required. The lightweight model transmission can reduce the handover decision latency, thereby minimizing service interruption time.

In some other scenarios, the lightweight model transmission process can minimize the impact of model transmission on conventional communication services. In other words, model transmission will occupy existing control plane/user plane/NAS resources, which may affect other communication services. However, the lightweight model transmission process can reduce the occupation of these resources by model transmission to a certain extent.

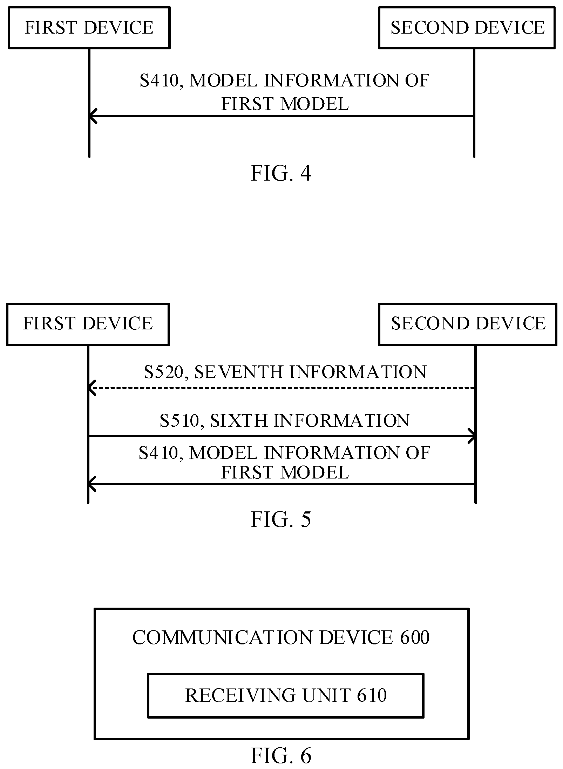

The method for model transmission in embodiments of the present disclosure will be introduced below with reference to FIG. 4. In embodiments of the present disclosure, a first model is not limited. For example, the first model may be an AI model, such as any neural network model mentioned above or another neural network model. For another example, the first model may be a machine learning (ML) model.

FIG. 4 is a schematic flowchart illustrating a method for model transmission according to embodiments of the present disclosure. The method as illustrated in FIG. 4 includes operations at S410.

At S410, a second device sends model information of a first model to a first device.

In some implementations, the model information of the first model is used for transmission of the first model, or the model information of the first model is associated with the transmission of the first model. In some other implementations, the model information of the first model is used for lightweight transmission of the first model, or the model information of the first model is associated with the lightweight transmission of the first model.

In some implementations, the model information of the first model includes one or more of: some or all model parameters of the first model, first information used for determining a model structure of the first model, second information associated with a compiling format for the first model, and third information associated with compression of the first model. The following will be introduced with reference to Example 1 to Example 4.

Example 1: the model information of the first model includes some or all model parameters of the first model.

In embodiments of the present disclosure, a certain degree of similarity is found between different models. For example, some models may have similar model structures. For another example, services processed by some models may be similar. This means that different models have some duplicated model information. For example, some models with similar model structures have duplicated model structure information. For another example, some models that process similar services have a duplicated model parameter(s). Therefore, it is believed that in a model transmission process, the second device does not need to transmit complete model information each time. Instead, the second device can transmit only a non-duplicated part of the model information, such as some or all model parameters of the first model, which can reduce the data volume of model data to be transmitted in the model transmission process, thereby shortening the time required for the model transmission process.

Therefore, in embodiments of the present disclosure, the first model can be parameterized. In other words, as introduced above, the model information of the first model includes some or all model parameters of the first model, such that the first model can be transmitted, which is conducive to reducing the data volume of model information required to be transmitted during transmission of the first model, thereby shortening the transmission time required for the model transmission process.

In some implementations, the model parameter may also be referred to as a model weight, as detailed in the introduction of model segmentation. For example, the model information of the first model includes some model weights of the first model, and the model information of the first model can include model weights of some layers of the first model. Taking the model structure as illustrated in FIG. 2 as an example, the model weights of some layers of the first model can be model parameters of the input layer.

In some other implementations, some model parameters may be model parameters with a significant impact on the performance of the first model among all model parameters of the first model. In other words, some model parameters may be associated with the performance of the first model. Therefore, some parameters of the first model are transmitted according to the model parameters of the first model, which is conducive to mitigating the impact of transmitting some model parameters on the performance of the first model and reducing the data volume of model information required to be transmitted in the model transmission process.

For example, the model information of the first model includes all model weights of the first model, and the model information of the first model can include model weights of all layers of the first model.

Example 2: the model information of the first model includes the first information used for determining the model structure of the first model.

In embodiments of the present disclosure, a certain degree of similarity is found between different models. For example, some models may have similar model structures. For another example, services processed by some models may be similar. This means that different models have some duplicated model information. For example, some models with similar model structures have duplicated model structure information. For another example, some models that process similar services have a duplicated model parameter(s). Therefore, it is believed that in a model transmission process, the second device does not need to transmit complete model information each time. Instead, the second device can transmit only a non-duplicated part of the model information, such as the first information used for determining the model structure of the first model, which can reduce the amount of model data to be transmitted in the model transmission process, thereby shortening the time required for the model transmission process.

Therefore, in embodiments of the present disclosure, the first model can be transmitted by carrying the first information in the model information of the first model, which is conducive to reducing the data volume of model information required to be transmitted during transmission of the first model, thereby shortening the transmission time required for the model transmission process.

In some implementations, the first information may include one or more of: a first identifier, a second identifier, a third identifier, fourth information, and fifth information.

For example, the first information includes the first identifier, and the first identifier can be associated with a second model. In some implementations, the association between the first identifier and the second model can mean that the first identifier is an identifier of the second model, which is also referred to as a model ID of the second model.

In embodiments of the present disclosure, the first model can be transmitted by carrying the first identifier in the model information of the first model. Compared with the conventional model transmission scheme that a model is transmitted as a whole, this method is conducive to reducing the data volume of model information required to be transmitted during transmission of the first model, thereby shortening the transmission time required for the model transmission process.

In some implementations, the second model may be identical to the first model. In this case, alternatively, the first identifier may be associated with the first model, for example, the first identifier is a model identifier of the first model. In some other implementations, the first model may be determined based on the second model, or in other words, the first model may be obtained by modifying the second model. For example, the first model may be obtained by adding a model module(s) to the second model. For another example, the first model may be obtained by deleting a model module(s) from the second model.

For example, the first information includes the second identifier, and the second identifier can be associated with a model structure of the second model. In some implementations, the association between the second identifier and the model structure of the second model can mean that the second identifier is an identifier of the model structure of the second model, which is also referred to as a model structure ID of the second model. Additionally, for the introduction of the model structure, reference may be made to that of the model segmentation.

In embodiments of the present disclosure, the first model can be transmitted by carrying the second identifier in the model information of the first model. Compared with the conventional model transmission scheme that a model is transmitted as a whole, this method is conducive to reducing the data volume of model information required to be transmitted during transmission of the first model, thereby shortening the transmission time required for the model transmission process.

In some implementations, the model structure of the second model may be identical to the model structure of the first model. Alternatively, the second identifier may be associated with the model structure of the first model. For example, the second identifier can be a model structure identifier of the first model. In some other implementations, the model structure of the first model may be determined based on the model structure of the second model, or in other words, the model structure of the first model may be obtained by modifying the model structure of the second model.

For example, the model structure of the first model may be obtained by adding a model module(s) to the model structure of the second model. For another example, the model structure of the first model may be obtained by deleting a model module(s) from the model structure of the second model.

For example, the first information includes the third identifier, and the third identifier can be associated with a model module of the first model. In some implementations, the association between the third identifier and the model module of the first model can mean that the third identifier is an identifier of the model module of the first model, which is also referred to as a model module ID of the first model. Additionally, for the introduction of the model module, reference may be made to that of the model segmentation.

In embodiments of the present disclosure, the first model can be transmitted by carrying the third identifier in the model information of the first model. Compared with the conventional model transmission scheme that a model is transmitted as a whole, this method is conducive to reducing the data volume of model information required to be transmitted during transmission of the first model, thereby shortening the transmission time required for the model transmission process.

In some implementations, the model structure of the first model may be determined based on the model structure of the second model. Alternatively, the model structure of the first model may be obtained by modifying the model structure of the second model. For example, the model structure of the first model may be obtained by adding the model module associated with the third identifier to the model structure of the second model. For another example, the model structure of the first model may be obtained by deleting the model module associated with the third identifier from the model structure of the second model.

In some implementations, in addition to indicating the model module of the first model, the third identifier can further indicate a modification manner associated with the model module of the first model. For example, the model structure of the first model may be obtained by adding the model module associated with the third identifier to the model structure of the second model. In this case, the third identifier indicates the addition of the model module. For another example, the model structure of the first model may be obtained by deleting the model module associated with the third identifier from the model structure of the second model. In this case, the third identifier indicates the deletion of the model module. Certainly, in embodiments of the present disclosure, the model module and the modification manner associated with the model module may be indicated by different information. In this case, the third identifier may only indicate the model module of the first model.

For example, the first information includes the fourth information, and the fourth information is associated with an arrangement position of a model module in the first model. In other words, the fourth information can indicate the arrangement position of the model module in the first model, where the arrangement position can be used for determining a layer of the model module in the first model.

In embodiments of the present disclosure, the first model can be transmitted by carrying the fourth information in the model information of the first model. Compared with the conventional model transmission scheme that a model is transmitted as a whole, this method is conducive to reducing the data volume of model information required to be transmitted during transmission of the first model, thereby shortening the transmission time required for the model transmission process.

In some implementations, the fourth information can include an identifier of a layer of the model module in the first model. For example, if the fourth information is an identifier of the second layer in the first model, it can be determined that the model module is positioned in the second layer in the first model. In some other implementations, the fourth information may indicate an identifier of a preceding layer of the model module in the first model. For example, if the fourth information is an identifier of the third layer in the first model, it can be determined that the model module is positioned in a layer below the third layer in the first model. Certainly, in embodiments of the present disclosure, the fourth information may indicate an identifier of a subsequent layer of the model module in the first model. For example, if the fourth information is an identifier of the fourth layer in the first model, it can be determined that the model module is positioned in a layer above the fourth layer in the first model.

In embodiments of the present disclosure, the first information may not carry the fourth information. In some scenarios, if the arrangement position of the model module in the first model can be directly determined based on the model module, the first information may not carry the fourth information. For example, the number of input nodes of the model module is *n,* correspondingly, in the first model, only the number of output nodes of the second layer is n, and the number of output nodes of any other layer is greater than *n.* In this case, the number of input nodes of the model module does not match the number of output nodes of any other layer. Therefore, the model module can only be positioned after the second layer of the first model. As such, the position of the model module in the first model can be directly determined based on the number of input nodes of the model module, rather than based on the fourth information.

For example, the first information includes the fifth information, and the fifth information can include module data of some model modules in the first model.

In some implementations, the module data can include a model parameter(s) of the model module and/or a model structure of the model module.

In some implementations, a model module associated with the fifth information may be module data of the model module to be modified in the second model as described above. In some other implementations, the model module associated with the fifth information may be module data of a model module to be updated in the second model, and an updated second model is the first model.

The foregoing introduces the first information in embodiments of the present disclosure. It can be understood that, in embodiments of the present disclosure, the first information may be used independently or in combination with one another. The following will introduce a scheme that the first information is used in combination with one another with reference to Implementation 1 to Implementation 4, and the scheme that the first information is used in combination with one another is not limited in the embodiments of the present disclosure.

Implementation 1: the model information of the first model includes the first identifier and some or all model parameters of the first model.

In some implementations, the first model can be obtained based on the second model. In this case, the model information of the first model can include the first identifier associated with the second model and some or all model parameters of the first model.

For example, multiple models can be stored in the first device. Correspondingly, the second device can send the first identifier and some or all model parameters of the first model to the first device. In this case, the second device can select the second model from the multiple models based on the first identifier, and then obtain the first model by combining the second model and the received some or all model parameters of the first model.

In embodiments of the present disclosure, the first model can be transmitted by carrying the first identifier and some or all model parameters of the first model in the model information of the first model. Compared with the conventional model transmission scheme that all model information of the first model is transmitted, this method is conducive to reducing the data volume of model information required to be transmitted in the model transmission process, thereby shortening the transmission time required for the model transmission process.

Implementation 2: the model information of the first model includes the second identifier and some or all model parameters of the first model.

In some implementations, the model structure of the first model may be identical to the model structure of the second model. In this case, the model information of the first model can include a second identifier associated with the model structure of the first model and some or all model parameters of the first model.

For example, model structures of multiple models can be stored in the first device. Correspondingly, the second device can send the second identifier and some or all model parameters of the first model to the first device. In this case, the second device can select the model structure of the first model from the model structures of the multiple models based on the second identifier, and then obtain the first model by combining the received some or all model parameters of the first model and the model structure of the first model.

In embodiments of the present disclosure, the second identifier and some or all model parameters of the first model can be carried in the model information of the first model. Compared with the conventional model transmission scheme that all model information of the first model is transmitted, this method is conducive to reducing the data volume of model information required to be transmitted in the model transmission process, thereby shortening the transmission time required for the model transmission process.

Implementation 3: the model information of the first model includes the third identifier and the fourth information.

In some implementations, the first model is obtained based on the second model. In this case, the model information of the first model can include the third identifier and information indicating an arrangement position of a model module associated with the third identifier in the first model.

For example, the model structure of the second model can be stored in the first device. Correspondingly, the second device can send the third identifier and the fourth information to the first device. In this case, the second device can determine the arrangement position of the model module associated with the third identifier in the first model based on the fourth information, and then obtain the first model by combining the model module associated with the third identifier and the model structure of the second model based on the fourth information.

In embodiments of the present disclosure, the first model can be transmitted by carrying the third identifier and the fourth information in the model information of the first model. Compared with the conventional model transmission scheme that all model information of the first model is transmitted, this method is conducive to reducing the data volume of model information required to be transmitted in the model transmission process, thereby shortening the transmission time required for the model transmission process.

Implementation 4: the model information of the first model includes the third identifier and some or all model parameters of the first model.

In some implementations, the first model is obtained based on the second model. In this case, the model information of the first model can include the third identifier and some or all model parameters of the first model.

For example, the model structure of the second model can be stored in the first device. Correspondingly, the second device can send the third identifier and some or all model parameters of the first model to the first device. In this case, the second device can obtain the model structure of the first model by modifying the model structure of the second model based on the model module associated with the third identifier, and then obtain the first model by combining some or all model parameters of the first model and the model structure of the first model.

In embodiments of the present disclosure, the first model can be transmitted by carrying the third identifier and the fourth information in the model information of the first model. Compared with the conventional model transmission scheme that all model information of the first model is transmitted, this method is conducive to reducing the data volume of model information required to be transmitted in the model transmission process, thereby shortening the transmission time required for the model transmission process.

In embodiments of the present disclosure, the model information of the first model can further include other model information in addition to the third identifier and some or all model parameters of the first model. The following describes the model information of the first model in embodiments of the present disclosure in conjunction with Implementation 4-1 to Implementation 4-4 by taking an example that the first model is determined based on the second model.

Implementation 4-1: the model information of the first model further includes the first identifier, and the model module associated with the third identifier is a model module to be deleted from the second model.

That is, the model information of the first model includes the first identifier, the third identifier, and some or all model parameters of the first model, where the first identifier is associated with the second model, and the model module associated with the third identifier is the model module to be deleted from the second model.

For example, multiple models can be stored in the first device. If the second device sends the model information of the first model to the first device, the first device can select the second model from the multiple models based on the first identifier. Additionally, the first device can determine the model module to be deleted from the second model based on the third identifier, and then obtain the model structure of the first model by deleting the model module associated with the third identifier from the second model. The first device obtains the first model by combining some or all model parameters of the first model and the model structure of the first model.

In embodiments of the present disclosure, the first model can be transmitted by carrying the first identifier, the third identifier, and some or all model parameters of the first model in the model information of the first model. Compared with the conventional model transmission scheme that all model information of the first model is transmitted, this method is conducive to reducing the data volume of model information required to be transmitted in the model transmission process, thereby shortening the transmission time required for the model transmission process.

Implementation 4-2: the model information of the first model further includes the first identifier, and the model module associated with the third identifier is a model module to be added to the second model.

That is, the model information of the first model includes the first identifier, the third identifier, and some or all model parameters of the first model, where the first identifier is associated with the second model, and the model module associated with the third identifier is the model module to be added to the second model.

In some implementations, multiple models can be stored in the first device. If the second device sends the model information of the first model to the first device, the first device can select the second model from the multiple models based on the first identifier. Additionally, the first device can determine the model module to be added to the second model based on the third identifier, and then obtain the model structure of the first model by adding the model module associated with the third identifier to the second model. The first device obtains the first model by combining some or all model parameters of the first model and the model structure of the first model.

For example, assume that the first identifier in the model information of the first model is a model ID of Model 2, the third identifier in the model information of the first model indicates addition of Model module 2, and the model information of the first model further includes the model parameters of the first model. After receiving the model information of the first model, the first device can select Model 2 from the multiple models based on the first identifier, where Model 2 includes Model module 1, Model module 3, and Model module 4. Additionally, the first device can obtain the model structure of the first model by adding Model module 2 to Model 2 based on the third identifier. In this case, the model structure of the first model includes Model module 1, Model module 2, Model module 3, and Model module 4. The first device obtains the first model by combining some or all model parameters of the first model and the model structure of the first model.

In embodiments of the present disclosure, the first model can be transmitted by carrying the first identifier, the third identifier, and some or all model parameters of the first model in the model information of the first model. Compared with the conventional model transmission scheme that all model information of the first model is transmitted, this method is conducive to reducing the data volume of model information required to be transmitted in the model transmission process, thereby shortening the transmission time required for the model transmission process.

Implementation 4-3: the model information of the first model further includes the second identifier, and the model module associated with the third identifier is a model module to be deleted from the model structure of the second model.

That is, the model information of the first model includes the second identifier, the third identifier, and some or all model parameters of the first model, where the second identifier is associated with the model structure of the second model, and the model module associated with the third identifier is the model module to be deleted from the model structure of the second model.

In some implementations, model structures of multiple models can be stored in the first device. If the second device sends the model information of the first model to the first device, the first device can select the model structure of the second model from the multiple models based on the second identifier. Additionally, the first device can determine the model module to be deleted from the model structure of the second model based on the third identifier, and then obtain the model structure of the first model by deleting the model module associated with the third identifier from the model structure of the second model. The first device obtains the first model by combining some or all model parameters of the first model and the model structure of the first model.

For example, assume that the second identifier in the model information of the first model is a model structure ID of Model 2, the third identifier in the model information of the first model indicates deletion of Model module 2, and the model information of the first model further includes the model parameters of the first model. After receiving the model information of the first model, the first device can select a model structure of Model 2 from the multiple models based on the first identifier, where the model structure of Model 2 includes Model module 1, Model module 2, Model module 3, and Model module 4. Additionally, the first device can obtain the model structure of the first model by deleting Model module 2 from Model 2 based on the third identifier. In this case, the model structure of the first model includes Model module 1, Model module 3, and Model module 4. The first device obtains the first model by combining some or all model parameters of the first model and the model structure of the first model.

In embodiments of the present disclosure, the first model can be transmitted by carrying the second identifier, the third identifier, and some or all model parameters of the first model in the model information of the first model. Compared with the conventional model transmission scheme that all model information of the first model is transmitted, this method is conducive to reducing the data volume of model information required to be transmitted in the model transmission process, thereby shortening the transmission time required for the model transmission process.

Implementation 4-4: the model information of the first model further includes the second identifier, and the model module associated with the third identifier is a model module to be added to the model structure of the second model.

That is, the model information of the first model includes the second identifier, the third identifier, and some or all model parameters of the first model, where the second identifier is associated with the model structure of the second model, and the model module associated with the third identifier is the model module to be added to the model structure of the second model.

In some implementations, model structures of multiple models can be stored in the first device. If the second device sends the model information of the first model to the first device, the first device can select the model structure of the second model from the multiple models based on the second identifier. Additionally, the first device can determine the model module to be added to the model structure of the second model based on the third identifier, and then obtain the model structure of the first model by adding the model module associated with the third identifier to the model structure of the second model. The first device obtains the first model by combining some or all model parameters of the first model and the model structure of the first model.

For example, assume that the second identifier in the model information of the first model is a model structure ID of Model 2, the third identifier in the model information of the first model indicates addition of Model module 2, and the model information of the first model further includes the model parameters of the first model. After receiving the model information of the first model, the first device can select a model structure of Model 2 from the multiple models based on the second identifier, and the model structure of Model 2 includes Model module 1, Model module 3, and Model module 4. Additionally, the first device can obtain the model structure of the first model by adding Model module 2 to the model structure of Model 2 based on the third identifier. In this case, the model structure of the first model includes Model module 1, Model module 2, Model module 3, and Model module 4. The first device obtains the first model by combining some or all model parameters of the first model and the model structure of the first model.

In embodiments of the present disclosure, the first model can be transmitted by carrying the second identifier, the third identifier, and some or all model parameters of the first model in the model information of the first model. Compared with the conventional model transmission scheme that all model information of the first model is transmitted, this method is conducive to reducing the data volume of model information required to be transmitted in the model transmission process, thereby shortening the transmission time required for the model transmission process.

As can be seen from the above, the scheme is applicable to scenarios where multiple models can be stored in the first device. In this case, the model information of the first model can carry the first identifier to indicate the second model from the multiple stored models, and/or the second identifier to indicate the model structure of the second model from the multiple stored model structures. In other scenarios, if only one second model is stored in the first device, the model information of the first model may not carry the first identifier and/or the second identifier, which is conducive to reducing the overhead required for transmitting the model information of the first model. Certainly, if there is no need to consider the overhead, when only one second model is stored in the first device, the model information of the first model may still carry the first identifier and/or the second identifier.

The following describes the model information of the first model in embodiments of the present disclosure in conjunction with Implementation 4-5 to Implementation 4-8 by taking an example that the first model is determined based on the second model and only one second model is stored in the first device.

Implementations 4-5: the model module associated with the third identifier is a model module to be deleted from the second model.

That is, the model information of the first model includes the third identifier and some or all model parameters of the first model, where the model module associated with the third identifier is the model module to be deleted from the second model.

In some implementations, one second model can be stored in the first device. If the second device sends the model information of the first model to the first device, the first device can determine the model module to be deleted from the second model based on the third identifier, and then obtain the model structure of the first model by deleting the model module associated with the third identifier from the second model. The first device obtains the first model by combining some or all model parameters of the first model and the model structure of the first model.

In embodiments of the present disclosure, the first model can be transmitted by carrying the third identifier and some or all model parameters of the first model in the model information of the first model. Compared with the conventional model transmission scheme that all model information of the first model is transmitted, this method is conducive to reducing the data volume of model information required to be transmitted in the model transmission process, thereby shortening the transmission time required for the model transmission process.

Implementations 4-6: the model module associated with the third identifier is a model module to be added to the second model.

That is, the model information of the first model includes the third identifier and some or all model parameters of the first model, where the model module associated with the third identifier is the model module to be added to the second model.

For example, one second model can be stored in the first device. If the second device sends the model information of the first model to the first device, the first device can determine the model module to be added to the second model based on the third identifier, and then obtain the model structure of the first model by adding the model module associated with the third identifier to the second model. The first device obtains the first model by combining some or all model parameters of the first model and the model structure of the first model.

In embodiments of the present disclosure, the first model can be transmitted by carrying the third identifier and some or all model parameters of the first model in the model information of the first model. Compared with the conventional model transmission scheme that all model information of the first model is transmitted, this method is conducive to reducing the data volume of model information required to be transmitted in the model transmission process, thereby shortening the transmission time required for the model transmission process.

Implementations 4-7: the model module associated with the third identifier is a model module to be deleted from the model structure of the second model.

That is, the model information of the first model includes the third identifier and some or all model parameters of the first model, where the model module associated with the third identifier is the model module to be deleted from the model structure of the second model.

For example, a model structure of one second model can be stored in the first device. If the second device sends the model information of the first model to the first device, the first device can determine the model module to be deleted from the model structure of the second model based on the third identifier, and then obtain the model structure of the first model by deleting the model module associated with the third identifier from the model structure of the second model. The first device obtains the first model by combining some or all model parameters of the first model and the model structure of the first model.

In embodiments of the present disclosure, the first model can be transmitted by carrying the third identifier and some or all model parameters of the first model in the model information of the first model. Compared with the conventional model transmission scheme that all model information of the first model is transmitted, this method is conducive to reducing the data volume of model information required to be transmitted in the model transmission process, thereby shortening the transmission time required for the model transmission process.

Implementations 4-8: the model module associated with the third identifier is a model module to be added to the model structure of the second model.

That is, the model information of the first model includes the third identifier and some or all model parameters of the first model, where the model module associated with the third identifier is the model module to be added to the model structure of the second model.

For example, a model structure of one second model can be stored in the first device. If the second device sends the model information of the first model to the first device, the first device can determine the model module to be added to the model structure of the second model based on the third identifier, and then obtain the model structure of the first model by adding the model module associated with the third identifier to the model structure of the. The first device obtains the first model by combining some or all model parameters of the first model and the model structure of the first model.

In embodiments of the present disclosure, the first model can be transmitted by carrying the third identifier and some or all model parameters of the first model in the model information of the first model. Compared with the conventional model transmission scheme that all model information of the first model is transmitted, this method is conducive to reducing the data volume of model information required to be transmitted in the model transmission process, thereby shortening the transmission time required for the model transmission process.

In some scenarios, some model modules of the first model may not be stored in the first device. Alternatively, in some other scenarios, some model modules of the first model may be stored in the first device but may not be understood by the first device (e.g., the first device is unable to recognize the functions of the model modules). In this case, the first device may be unable to determine the first model based on the model information of the first model. For example, if the model information of the first model only includes the third identifier, the first device may be unable to determine the model module based on the third identifier.

Therefore, to address the above issue, the second device can carry the fifth information in the model information of the first model, where the fifth information can include module data of some model modules in the first model. Correspondingly, the first device can determine the model module based on the module data. In other words, the model information of the first model includes a target identifier and the fifth information, where the target identifier includes one or more of the first identifier, the second identifier, and the third identifier.

In some implementations, the model information of the first model may include any information described above. For example, the model information of the first model may further include some or all model parameters of the first model. For example, the model information of the first model includes the model parameters of the first model, and if the fifth information includes a model parameter(s) of a model module associated with the fifth information, the model parameters of the first model can include a model parameter(s) of another model module other than the model module associated with the fifth information. Certainly, in embodiments of the present disclosure, the model parameters of the first model may also be all model parameters of the first model.

For ease of understanding, the fifth information in embodiments of the present disclosure is introduced below by taking the first identifier, the second identifier, and the third identifier as examples. It can be understood that, the fifth information can be used in combination with any kind of model information of the first model introduced above. The use of the fifth information is similar in different combinations, which is not repeated herein for brevity.

Implementation 5-1: the model information of the first model includes the first identifier and the fifth information.

In some implementations, the first identifier is associated with the second model, and the fifth information indicates the module data of some model modules in the first model.

For example, multiple models can be stored in the first device. If the second device sends the model information of the first model to the first device, the first device can select the second model from the multiple models based on the first identifier. Additionally, the first device can obtain the first model by combining the module data and the second model based on the fifth information.

It can be noted that, a manner of combining the model module associated with the fifth information and the second model is not limited. For example, a position of the model module associated with the fifth information in the second model can be determined based on the third identifier. In this case, the model information of the first model can carry the third identifier. Certainly, in embodiments of the present disclosure, the position of the model module associated with the fifth information in the second model can be determined based on the model module associated with the fifth information, for example, based on the number of output nodes and/or the number of input nodes of the model module associated with the fifth information. For details, reference may be made to the introduction of the fourth information.

In embodiments of the present disclosure, the first model can be transmitted by carrying the first identifier and the fifth information in the model information of the first model. Compared with the conventional model transmission scheme that all model information of the first model is transmitted, this method is conducive to reducing the data volume of model information required to be transmitted in the model transmission process, thereby shortening the transmission time required for the model transmission process.

Implementation 5-2: the model information of the first model further includes the second identifier and the fifth information.

In some implementations, the second identifier is associated with the model structure of the second model, and the fifth information indicates the module data of some model modules in the first model.

For example, model structures of multiple models can be stored in the first device. If the second device sends the model information of the first model to the first device, the first device can select the model structure of the second model from the multiple models based on the second identifier. Additionally, the first device can obtain the first model by combining the module data of some model modules in the first model and the model structure of the second model based on the fifth information.

It can be noted that, a manner of combining the model module associated with the fifth information and the model structure of the second model is not limited. For example, a position of the model module associated with the fifth information in the model structure of the second model can be determined based on the third identifier. In this case, the model information of the first model can carry the third identifier. Certainly, in embodiments of the present disclosure, the position of the model module associated with the fifth information in the model structure of the second model can be determined based on the model module associated with the fifth information, for example, based on the number of output nodes and/or the number of input nodes of the model module associated with the fifth information. For details, reference may be made to the introduction of the fourth information.

In embodiments of the present disclosure, the first model can be transmitted by carrying the second identifier and the fifth information in the model information of the first model. Compared with the conventional model transmission scheme that all model information of the first model is transmitted, this method is conducive to reducing the data volume of model information required to be transmitted in the model transmission process, thereby shortening the transmission time required for the model transmission process.

Implementation 5-3: the model information of the first model includes the third identifier and the fifth information.

In some implementations, the model module associated with the third identifier is the model module to be added to the model structure of the second model. The fifth information indicates the module data of the model module associated with the third identifier.

For example, only a model structure of one second model is stored in the first device. If the second device sends the model information of the first model to the first device, the first device can determine the model module associated with the third identifier based on the fifth information. Then, the first device can obtain the first model by determining the model module to be added to the model structure of the second model based on the third identifier.

In embodiments of the present disclosure, the first model can be transmitted by carrying the third identifier and the fifth information in the model information of the first model. Compared with the conventional model transmission scheme that all model information of the first model is transmitted, this method is conducive to reducing the data volume of model information required to be transmitted in the model transmission process, thereby shortening the transmission time required for the model transmission process.

Implementation 5-4: the model information of the first model includes the second identifier, the third identifier, and the fifth information.

In some implementations, the second identifier indicates the model structure of the second model, the model module associated with the third identifier is the model module to be added to the model structure of the second model, and the fifth information indicates the module data of the model module associated with the third identifier.

For example, only model structures of multiple models are stored in the first device. If the second device sends the model information of the first model to the first device, the first device can determine the model module associated with the third identifier based on the fifth information. Additionally, the first device can select the model structure of the second model from the model structures of the multiple models based on the second identifier. Subsequently, the first device can obtain the first model by determining the model module to be added to the model structure of the second model based on the third identifier.

In embodiments of the present disclosure, the first model can be transmitted by carrying the third identifier and the fifth information in the model information of the first model. Compared with the conventional model transmission scheme that all model information of the first model is transmitted, this method is conducive to reducing the data volume of model information required to be transmitted in the model transmission process, thereby shortening the transmission time required for the model transmission process.

In the foregoing embodiment, the model structure of the first model can be determined based on the model module associated with the third identifier and the arrangement position of the model module associated with the third identifier in the first model, where the arrangement position of the model module associated with the third identifier in the first model may be determined based on the model information of the first model. In this case, the model information of the first model can further include the fourth information. Certainly, the arrangement position of the model module associated with the third identifier in the first model may be determined based on the number of input nodes of the model module and/or the number of output nodes of the model module. For details, reference may be made to the introduction of the fourth information.

Example 3: the model information of the first model includes the second information associated with the compiling format for the first model.

In embodiments of the present disclosure, it is found that the failure to consider the compiling format for the first model may result in a large amount of model data required to be transmitted in the model transmission process. The amount of model data of the first model varies significantly between different compiling formats. Therefore, in embodiments of the present disclosure, the compiling format for the first model can be selected, and the second information associated with the compiling format for the first model can be carried in the model information of the first model, which can reduce the data volume of model information required to be transmitted during transmission of the first model, thereby shortening the transmission time required for the model transmission process.

In some implementations, the compiling format for the first model can indicate a compiling format used for compiling the model data of the first model. For example, the first model is an AI model, and a compiling format for the AI model is used for converting a trained AI model into a specific binary format for execution on a specific hardware or software platform. The compiling format can enhance the operational efficiency and performance of the AI model, and fully leverage acceleration capabilities of the underlying hardware. Different hardware or software platforms may require different compiling formats. Common compiling formats include TensorFlow, open neural network exchange (ONNX), convolutional architecture for fast feature embedding (Caffe), Theano, PyTorch, etc. With a compiling format, the AI model can operate efficiently in different environments, such as an embedded device, a mobile device, or a cloud server.

In embodiments of the present disclosure, the model data of the first model can include one or more of: model structure data of the first model, model module data of the first model, and model parameters of the first model. The model module data of the first model can include some or all model module data of the first model. The model structure data of the first model can include some or all model structure data of the first model. The model parameters of the first model can include some or all model parameters of the first model.

In some implementations, the second information may include information indicating the compiling format for the first model, or the second information may indicate the compiling format for the first model. Correspondingly, in some other implementations, the model data of the first model includes a first model conforming to the compiling format. That is, both the first model conforming to the compiling format and the second information may be transmitted via the model information of the first model. Certainly, in embodiments of the present disclosure, the first model conforming to the compiling format and the second information may be transmitted via different information.

In some implementations, the second information includes information indicating a compiling format for model data of the first model, or the second information indicates the compiling format for the model data of the first model.

In some implementations, the second information may include an index of the compiling format for the first model. In some other implementations, the second information may include an identifier of the compiling format for the first model.

In embodiments of the present disclosure, the second information may be carried in multiple bits in the model information of the first model. For example, if values of the multiple bits are 001, it indicates that the compiling format is PyTorch. For another example, if values of the multiple bits are 0001, it indicates that the compiling format is TensorFlow. In embodiments of the present disclosure, the number of bits can be determined based on the total number of compiling formats to be indicated. Typically, the number of bits is set such that the total number of compiling formats that can be indicated through the bits is greater than or equal to the total number of compiling formats to be indicated. For example, if the total number of compiling formats to be indicated is five, the number of bits can be set to three, and the three bits can indicate eight compiling formats.

In some other implementations, the compiling format for the first model can be a default compiling format. For example, the default compiling format is PyTorch. If the model information of the first model does not carry the second information, the compiling format for the first model can also be PyTorch.

In some implementations, the compiling format associated with the second information is a first compiling format. The model information of the first model further includes the first model conforming to the first compiling format, where the first compiling format may be one of one or more compiling formats supported by the second device. That is, both the first model conforming to the first compiling format and the second information can be transmitted via the model information of the first model.

In some other implementations, the compiling format associated with the second information is the first compiling format. The model information of the first model further includes model data of the first model conforming to the first compiling format, where the first compiling format may be one of the one or more compiling formats supported by the second device. That is, both the model data of the first model conforming to the first compiling format and the second information can be transmitted via the model information of the first model. The model data of the first model may include one or more of: some or all parameters of the first model, model structure information of the first model, and module data of some model modules in the first model.

Typically, different compiling formats may correspond to different amounts of model data. For example, if the compiling format is PyTorch, the amount of model data of the first model conforming to the compiling format is 5M. If the compiling format is TensorFlow, the amount of model data of the first model conforming to the compiling format is 10M. Therefore, to reduce the amount of model data of the first model, if the first device supports one or more compiling formats, the first compiling format may be a compiling format among the one or more compiling formats that corresponds to the smallest amount of model data. Taking TensorFlow and PyTorch mentioned above as examples, assuming that the first device supports both TensorFlow and PyTorch, the first compiling format can be PyTorch.

It can be noted that, the first compiling format is the compiling format corresponding to the smallest amount of model data among the one or more compiling formats supported by the first device. However, the first compiling format may not be a compiling format corresponding to the smallest amount of model data among the one or more compiling formats supported by the second device.

For example, the amount of model data corresponding to Compiling format 1 is greater than the amount of model data corresponding to Compiling format 2, and the amount of model data corresponding to Compiling format 2 is greater than the amount of model data corresponding to Compiling format 3. In addition, the second device supports Compiling format 1, Compiling format 2, and Compiling format 3, but the first device only supports Compiling format 1 and Compiling format 2. In this case, the first compiling format is Compiling format 2, i.e., the compiling format corresponding to the smallest amount of model data among the compiling formats supported by the first device.

Certainly, in embodiments of the present disclosure, the first compiling format may be the compiling format corresponding to the smallest amount of model data among the one or more compiling formats supported by the second device. With reference to the above example again, assume the first device also supports Compiling format 1, Compiling format 2, and Compiling format 3. In this case, the first compiling format is Compiling format 3, i.e., the first compiling format is the compiling format corresponding to the smallest amount of model data among the one or more compiling formats supported by the second device.

In some scenarios, the second device can perform compiling format conversion on the model data of the first model. The compiling format conversion can be understood as the conversion of the compiling format, i.e., the model data of the first model is model data of a first model subjected to compiling format conversion.

In embodiments of the present disclosure, the model data of the first model is subjected to compiling format conversion, such that the model data of the first model can be transmitted by using an appropriate compiling format, thereby reducing the amount of model data of the first model.

Certainly, in embodiments of the present disclosure, to reduce the complexity of the compiling format conversion performed by the second device, the second device can pre-store models corresponding to respective compiling formats. In this way, the second device may no longer perform compiling format conversion but to directly transmit a model corresponding to a required compiling format. For example, the second device can store a first model conforming to Compiling format 1 and a first model conforming to Compiling format 2. If the first compiling format is Compiling format 1, the second device can directly send the first model conforming to Compiling format 1 to the first device.

In some implementations, the second information is associated with the conversion of the compiling format for the first model. For example, the second information indicates that the first model is a model subjected to compiling format conversion. Correspondingly, in some other implementations, the second information further includes the first model subjected to compiling format conversion. That is, both the second information and the first model subjected to compiling format conversion can be transmitted via the model information of the first model. Certainly, in embodiments of the present disclosure, the second information and the first model subjected to compiling format conversion can be transmitted via different information.

For another example, the second information indicates that the model data of the first model is a model subjected to compiling format conversion. Correspondingly, in some other implementations, the second information further includes model data of the first model subjected to compiling format conversion. That is, both the second information and the model data of the first model subjected to compiling format conversion can be transmitted via the model information of the first model. Certainly, in embodiments of the present disclosure, the second information and the model data of the first model subjected to compiling format conversion can be transmitted via different information.

In some implementations, the second information includes one or more of: information indicating whether the model data of the first model is subjected to compiling format conversion, information indicating a compiling format used for the model data of the first model before compiling format conversion, information indicating a compiling format used for the model data of the first model after compiling format conversion, and information indicating a compiling format to be used for the model data of the first model when running on the first device.

If the second information includes the information indicating whether the model data of the first model is subjected to compiling format conversion, in embodiments of the present disclosure, the second information may also be referred to as "format conversion indication".

Assume the second information occupies one bit. If a value of the bit is a first value, it indicates that the compiling format for the first model is subjected to compiling format conversion. If the value of the bit is a second value, it indicates that the compiling format for the first model is not subjected to compiling format conversion. The first value and the second value are different. For example, the first value may be 0, and the second value may be 1. Alternatively, the first value may be 1, and the second value may be 0. Certainly, in embodiments of the present disclosure, the second information may occupy multiple bits.

For example, the second information includes the information indicating the compiling format used for the model data of the first model before compiling format conversion, or the second information indicates an original compiling format for the first model before compiling format conversion.

In some implementations, the second information may carry indication information (e.g., an index) of the original compiling format to indicate the original compiling format. Certainly, in embodiments of the present disclosure, the second information may carry a name of the original compiling format.

In embodiments of the present disclosure, the original compiling format is indicated by the second information, such that the first device can be aware of the original compiling format for the first model. In some scenarios, the first device can indicate, based on the original compiling format for the first model, the second device not to perform compiling format conversion. For example, when the first device runs the first model conforming to the original compiling format, the first device typically has better performance or faster running speed. In this case, the first device can indicate, based on the second information, the first device not to perform compiling format conversion.

For example, the second information includes the information indicating the compiling format used for the model data of the first model after compiling format conversion, or in other words, the second information indicates an original compiling format for the first model after compiling format conversion.

In some implementations, the second information may carry indication information (e.g., an index) of the compiling format for the first model after compiling format conversion. Certainly, in embodiments of the present disclosure, the second information may carry the name of the original compiling format.

In embodiments of the present disclosure, the compiling format for the first model after compiling format conversion is indicated by the second information, such that the first device can be aware of the compiling format for the first model after compiling format conversion. In some scenarios, the first device can run the first model based on the compiling format for the first model after compiling format conversion.

Certainly, in embodiments of the present disclosure, the second information may be used independently or in combination with one another. For example, the second information may indicate both the compiling format for the first model before compiling format conversion and the compiling format for the first model after compiling format conversion. In other words, the second information indicates that the compiling format for the first model is converted from the original compiling format to a target compiling format (i.e., the compiling format after compiling format conversion).

For example, the second information includes the information indicating the compiling format to be used for the model data of the first model when running on the first device, or in other words, the second information can indicate the compiling format to be used for the model data of the first model when running on the first device.

In some implementations, the compiling format to be used for the model data of the first model when running on the first device may be a compiling format that achieves better performance when the first model runs on other devices. For example, the compiling format to be used for the model data of the first model when running on the first device may be a compiling format that achieves a fast running speed when the first model runs on other devices. For another example, the compiling format to be used for the model data of the first model when running on the first device may be a compiling format that requires small storage space when the first model runs on other devices.

In some implementations, the compiling format to be used for the model data of the first model when running on the first device (also referred to as "running compiling format") may differ from a compiling format used when transmitting the model data of the first model (also referred to as "transmission compiling format"). In this case, the first device can perform compiling format conversion on received model data of the first model based on the second information. Therefore, the second information can be used for assisting the first device in conversion between the transmission compiling format and the running compiling format. Certainly, in embodiments of the present disclosure, the running compiling format may be identical to the transmission compiling format. In this case, the first device may not need to perform compiling format conversion on the received model data of the first model.

In some implementations, the second information may carry indication information (e.g., an index) of the compiling format mentioned above. Certainly, in embodiments of the present disclosure, the second information may carry a name of the compiling format.

Example 4: the model information of the first model includes the third information associated with the compression of the first model.

In embodiments of the present disclosure, the first model can be obtained by compressing an original model, and the third information associated with the compression of the first model can be carried in the model information of the first model. Compared with the conventional model transmission scheme that the original model is directly transmitted, this method is conducive to reducing the data volume of model information required to be transmitted during the transmission of the first model, thereby reducing the transmission time required for the model transmission process.

In some implementations, the first model included in the model information of the first model is a compressed model. In other words, the model information of the first model can include the third information and the first model. Certainly, in embodiments of the present disclosure, the third information and the first model may be transmitted via different information.

In some implementations, model data of the first model included in the model information of the first model is compressed model data. In other words, the model information of the first model can include the third information and the model data of the first model. Certainly, in embodiments of the present disclosure, the third information and the model data of the first model may be transmitted via different information.

In some implementations, a compression format for the first model includes bitstream compression. Bitstream compression aims to reduce the number of bits occupied for the transmission of the model data of the first model by compressing using redundant information in the model data of the first model. Common bitstream compression may include lossless compression, Huffman coding, predictive coding, ARITHMETIC algorithm, etc.

In some implementations, the model data of the first model can be obtained by compressing some original model information of the first model based on bitstream compression. For example, the model structure information of the first model can be obtained by compressing original model structure information of the first model based on bitstream compression. Certainly, in embodiments of the present disclosure, all original model information of the first model can be compressed based on bitstream compression.

In some implementations, different bitstream compression algorithms can be used for different data in the original model information of the first model. For example, Huffman coding may be used to compress the original model structure information of the first model, and ARITHMETIC algorithm may be used to compress original model parameters of the first model, thereby enhancing the flexibility of information compression. Certainly, in embodiments of the present disclosure, the same bitstream compression algorithm may be used for different data in the original model information of the first model, to simplify the complexity of data compression.

In some implementations, the compression format for the first model includes model compression. Model compression refers to compressing the original model into a small-scale first model through techniques such as knowledge distillation, network pruning, etc. The compressed model (i.e., the "first model") typically has a different model structure from the original model. The first model can achieve a function(s) similar to that of the original model, but the performance of the first model is lower than that of the original model.

In embodiments of the present disclosure, model compression and bitstream compression may be used independently or in combination with one another. For example, model compression can be performed on the original model to obtain a compressed model, and based on this, bitstream compression can then be performed on the compressed model. That is, the compression format for the first model is to perform bitstream compression on the first model subjected to model compression.

In some implementations, the third information includes one or more of: information indicating that the model data of the first model is compressed model data, information indicating the performance of the first model (i.e., the compressed model), and information indicating the compression format for the first model.

For example, the third information includes the information indicating that the model data of the first model is the compressed model data, or in other words, the third information includes information indicating whether the model data of the first model is the compressed model data.

For example, the third information includes the information indicating the compression format for the first model, or in other words, the third information includes information indicating a compression format used for the model data of the first model.

In some implementations, the compression format for the first model may include bitstream compression or model compression. Correspondingly, the third information may include information indicating that the compression format corresponding to the model data of the first model is bitstream compression. Alternatively, the third information may include information indicating that the compression format corresponding to the model data of the first model is model compression. Certainly, in embodiments of the present disclosure, the third information may directly carry a name of the compression format.

In embodiments of the present disclosure, the indication of the compression format is not limited. In some implementations, two compression formats may be indicated through one or more bits in the information. For example, the two compression formats are indicated through one bit in the information. If a value of the bit is a first value, it indicates that the compression format corresponding to the model data of the first model is bitstream compression. If the value of the bit is a second value, it indicates that the compression format corresponding to the model data of the first model is model compression. The first value and the second value are different. For example, the first value may be 1, and the second value may be 0.

For example, the two compression formats are indicated through multiple bits in the information. If values of the multiple bits are 001, it indicates that the model data of the first model corresponds to model compression. If the values of the multiple bits are 100, it indicates that the model data of the first model corresponds to bitstream compression.

In embodiments of the present disclosure, the information indicating the compression format may be the same as information indicating whether the model data of the first model is compressed. For example, if the information indicates that the compression format for the model data of the first model is model compression, the information can also indicate that the model data of the first model is compressed. Certainly, in embodiments of the present disclosure, the information indicating the compression format may be different from the information indicating whether the model data of the first model is compressed.

As introduced above, multiple compression algorithms are currently supported for bitstream compression. Therefore, to simplify the decompression complexity of the first device, the compression format for the first model can include a compression algorithm used for bitstream compression. For example, the third information may include information indicating that the compression format for the first model is lossless compression. For another example, the third information may include information indicating that the compression format for the first model is Huffman coding. For another example, the third information may include information indicating that the compression format for the first model is predictive coding. For another example, the third information may include information indicating that the compression format for the first model is ARITHMETIC algorithm.

In some implementations, the third information may include the information indicating the compression format for the first model. For example, the third information may include an index of the compression format for the first model. For another example, the third information may include an identifier of the compression format for the first model.

In embodiments of the present disclosure, the information indicating the compression format for the first model can be indicated through multiple bits in the model information of the first model. For example, if values of the multiple bits are 001, it indicates that the compression format is lossless compression. For another example, if the values of the multiple bits are 0001, it indicates that the compression format is predictive coding. In embodiments of the present disclosure, the number of multiple bits can be determined based on the total number of compression formats to be indicated. Typically, the number of bits is set such that the total number of compression formats that can be indicated through the bits is greater than or equal to the total number of compression formats to be indicated. For example, if the total number of compression formats to be indicated is five, the number of bits can be set to three, and the three bits can indicate eight compression formats.

In some other embodiments, the compression format for the first model may be a default compression format, such as Huffman coding. For example, if the compression format for the first model is not indicated in the model information of the first model, the compression format for the first model is the default compression format, i.e., Huffman coding.

For example, the third information includes the information indicating the performance of the first model, such that the first device can determine the performance of the first model (i.e., the compressed model).

In some implementations, the information indicating the performance of the first model may include one or more of: accuracy, recall, precision, mean square error (MSE), training time, loss function, memory usage, inference time, etc.

Accuracy indicates the overall classification or regression accuracy of the first model on a test dataset. Generally, higher accuracy indicates better performance of the first model.

As for recall and precision, for classification issues, recall refers to a proportion of the number of samples correctly predicted as positive examples by the first model to the number of all actual positive examples, and the precision refers to a proportion of the number of samples correctly predicted as positive examples by the first model to the number of all samples predicted as positive examples. Generally, both higher recall and higher precision indicate better performance of the first model.

For regression issues, MSE is an indicator used for measuring an average difference between a predicted value and a true value of the first model. Generally, a smaller MSE indicates better performance of the first model.

Loss function is a function used for measuring a difference between a predicted value and a true value of the first model. Common loss functions include an MSE loss function, a cross-entropy loss function, etc. The performance of the first model can be improved by optimizing the loss function.

Training time refers to a duration required for training the first model. Generally, a shorter training time indicates better performance of the first model.

Memory usage refers to a memory size required during the operation of the first model. Generally, less memory usage indicates better performance of the first model.

Inference time refers to a duration required for the first model to perform inference or prediction. Generally, shorter inference time indicates better performance of the first model.

In embodiments of the present disclosure, the scheme for performing compiling format conversion on the model data of the first model and the scheme for compressing the first model may be used independently or together. If the two schemes are used together, the model data of the first model involved in the model compression scheme may be subjected to compiling format conversion. For compiling format conversion, reference may be made to the introduction of the second information mentioned above.

In some scenarios, before the second device sends the model information of the first model, the first device can send sixth information to the second device, to assist the second device in sending the model information of the first model to the first device, thereby enhancing the rationality of the second device sending the model information of the first model to the first device. That is, as illustrated in FIG. 5, before the operations at S410, the method further includes operations at S510, i.e., the first device sends the sixth information to the second device.

In some implementations, the sixth information indicates one or more of: capability information associated with the first model, time information indicating when the first device requires the first model, stored model information in the first device, a requirement of the first device for the performance of the first model, whether the first device supports model compression, information associated with data arrival in the first device, position information of the first device, serving cell information of the first device, neighboring cell information of the first device, and buffer status report (BSR) information of the first device.

For example, the sixth information indicates the capability information associated with the first model. The capability information associated with the first model may also be referred to as capability information of the first device, where the capability information of the first device may be associated with the first model. The capability information of the first device in embodiments of the present disclosure is described below.

In some implementations, the capability information of the first device may indicate whether the first device has dedicated hardware for accelerating model inference, where the dedicated hardware may include, for example, a computational unit such as a graphics processing unit (GPU), an application-specific integrated circuit (ASIC), etc.

In some implementations, the capability information of the first device may indicate memory space that can be allocated by the first device for model storage. Generally, a larger memory space allocable for the model indicates that the first device is able to store a greater number of models.

In some implementations, the capability information of the first device may indicate cache space that can be allocated by the first device for model inference. A larger cache space enables the first device to run a larger model and a greater number of models.

In some implementations, the capability information of the first device may indicate computational power allocated by the first device for model inference. Generally, the greater the computational power allocable for the model indicates that the first device can run a larger model and a greater number of models.

In some implementations, the capability information of the first device may indicate battery power allocated by the first device for model inference. Generally, the more battery power allocable for model inference indicates that the first device can run a larger model and a greater number of models.

In some implementations, the capability information of the first device may indicate the remaining memory space available for model storage in the first device. In some scenarios, the memory space allocated by the first device for model storage may be partially occupied by a model, leaving only the remaining memory space available for a new model. Therefore, indicating the remaining memory space can assist the second device in indicating a first model that matches the remaining memory space.

In some implementations, the capability information of the first device may indicate the remaining cache space available for model inference in the first device. In some scenarios, the cache space allocated by the first device for model storage may be partially occupied by a model, leaving only the remaining cache space available for a new model. Therefore, indicating the remaining cache space can assist the second device in indicating a first model that matches the remaining cache space.

In some implementations, the capability information of the first device may indicate the remaining computational capacity available for model inference in the first device. In some scenarios, the computational capacity allocated by the first device for model inference may be partially occupied by a model, leaving only the remaining computational capacity available for a new model. Thus, indicating the remaining computational capacity can assist the second device in indicating a first model that matches the remaining computational capacity.

In some implementations, the capability information of the first device may indicate the remaining battery power available for model inference in the first device. In some scenarios, the battery power allocated by the first device for model inference may be partially occupied by a model, leaving only the remaining battery power available for a new model. Thus, indicating the remaining battery power can assist the second device in indicating a first model that matches the remaining battery power.

In some implementations, the capability information of the first device may indicate a compiling format supported by the first device, which is beneficial for the second device to indicate a first model that conforms to the compiling format supported by the first device to the first device. As mentioned above, the compiling format constitutes a basic environment for a model to run. If a compiling format required for the model is not a compiling format supported by the first device, the first device is unable to perform inference on the model. For example, if the first device only supports PyTorch compiling format but the first model indicated by the second device conforms to Tensorflow compiling format, the first model is unable to run on the first device.

In some scenarios, the sixth information can contain stored model-related information. Specific examples are provided below.

For example, the sixth information indicates the time information indicating when the first device requires the first model. In some implementations, the time information can be a time when the first device needs to obtain a result of the model inference. Correspondingly, the time information indicating when the first device requires the first model can be determined based on the time when the first device needs to obtain the result of the model inference.

A manner of indicating the time information is not limited in embodiments of the present disclosure. In some implementations, the time information may be expressed as world time. For example, the time information is 23:12:34.023 on July 25, 2023. In some other implementations, the time information may be expressed as a time unit, where the time unit may include, for example, a frame, a subframe, a slot, an orthogonal frequency division multiplexing (OFDM) symbol, etc. For example, the time information may be the fifth OFDM symbol in the second slot in Subframe 1.

In some other implementations, the time information may be time information indicating when the first model is required. For the representation of the time information, reference may be made to the introduction mentioned above.

In some other implementations, the sixth information may include indication information of a time offset, where the time offset is a time offset between the time information indicating when the first device requires the first model and a current time. The current time may be a time at which the first device generates the sixth information.

A manner of indicating the time offset is not limited in embodiments of the present disclosure. In some implementations, the time offset may be expressed as a duration. For example, the time offset may be one second. In some other implementations, the time offset may be expressed as a time unit, where the time unit may include, for example, a frame, a subframe, a slot, an OFDM symbol, etc. For example, the time offset may be ten OFDM symbols. For another example, the time offset may be one subframe.

For example, the sixth information indicates the model-related information stored in the first device, where the stored model-related information includes one or more of: stored model identifier information, the number of stored models, a stored model structure identifier, the number of stored model structures, and stored model module information.

In some implementations, the stored model module information may include one or more of: a stored model module identifier and the number of stored model modules.

In embodiments of the present disclosure, the first device may send the stored model module information to the second device, which can assist the second device in determining whether the stored model information can be reused to transmit the first model, thereby reducing the data volume for transmitting the model data of the first model.

For example, the stored model information may be 001, which indicates three hidden layers, each containing 100 nodes. Alternatively, the stored model information may be 010, which indicates two hidden layers, each containing 50 nodes.

For example, model structure information of the stored model is 001, which indicates an LSTM structure. For another example, the model structure information of the stored model is 010, which indicates a transformer structure.

In embodiments of the present disclosure, the first device may send the stored model-related information to the second device, which can assist the second device in determining whether the stored model-related information can be reused to transmit the first model, thereby reducing the data volume for transmitting the model data of the first model.

For example, the sixth information indicates a requirement of the first device for model performance of the first model. For the model performance of the first model, reference may be made to the introduction mentioned above. For example, the model performance includes precision. Assuming that the first model is used for positioning, the sixth information indicates that the first device has a requirement on the model performance of the first model that a positioning error is less than or equal to 0.5m.

For example, the sixth information indicates whether the first device supports model compression. As mentioned above, model compression may lead to degradation in model performance. In this case, if the first device cannot tolerate the performance degradation caused by model compression, the first device does not support model compression.

In some other scenarios, the sixth information may contain information related to the first device. Specific examples are provided below.

For example, the sixth information indicates the information associated with the data arrival in the first device, where the data may be data to be processed by the first model.

In some implementations, the information associated with the data arrival in the first device may include information associated with data arrival at a current time and/or information associated with data arrival at a previous time. The information associated with the data arrival may include a data arrival time and/or a data arrival volume.

For example, the information associated with the data arrival may include one or more of: a data arrival volume at a current time, data arrival volumes at M consecutive sampling points preceding the current time, where *M* is a positive integer, data arrival times at the *M* consecutive sampling points preceding the current time, where *M* is a positive integer, a data arrival volume in a second time window preceding the current time, and a data arrival time in a second time window preceding the current time.

For example, the sixth information indicates the position information of the first device. In some implementations, the position information of the first device can indicate a position of the first device. For example, the position information of the first device may include one or more of: position coordinates of the first device, a relative position between the first device and a reference point (e.g., a network device).

In some implementations, the position information of the first device may indicate the movement of the first device. For example, the position information of the first device may include one or more of: multiple positions of the first device over a period of time, N consecutive position points of the first device, where N is a positive integer, a moving speed of the first device, and a displacement of the first device over a period of time.

In some implementations, if the position information of the first device includes multiple position information, the position information of the first device can indicate the movement of the first device, such as the moving speed of the first device or a moving direction of the first device.

In some implementations, the position information of the first device may include position information of the first device at the current time and/or position information of the first device at the previous time. For example, the position information of the first device may include one or more of the following information of the first device: a position at the current time, N consecutive position points preceding the current time, where *N* is a positive integer, position information in a second time window preceding the current time, etc.

For example, the sixth information indicates the serving cell information of the first device. In some implementations, the serving cell information can be related to a serving cell. For example, the serving cell information may include one or more of: an identifier of the serving cell and a signal quality of the serving cell. The identifier of the serving cell may include a physical cell ID (PCI). The signal quality of the serving cell may include one or more of: reference signal receiving power (RSRP), reference signal receiving quality (RSRQ), and signal-to-interference-plus-noise ratio (SINR).

In embodiments of the present disclosure, the serving cell information may include current information and/or previous information of the serving cell. Taking the signal quality as an example, the serving cell information may include one or more of the following information of the serving cell: a signal quality at the current time, signal qualities at P consecutive sampling points preceding the current time, where P is a positive integer, and a signal quality in a second time window preceding the current time.

For example, the sixth information indicates the neighboring cell information of the first device. In some implementations, the neighboring cell information can be related to a neighboring cell of the first device. For example, the neighboring cell information may include one or more of: an identifier of the neighboring cell and a signal quality of the neighboring cell. The identifier of the neighboring cell may include a PCI of the neighboring cell. The signal quality of the neighboring cell may include one or more of: an RSRP, an RSRQ, and an SINR.

In embodiments of the present disclosure, the neighboring cell information may include current information and/or previous information of the neighboring cell. Taking the signal quality as an example, the neighboring cell information may include one or more of the following information of the neighboring cell: a signal quality at the current time, signal qualities at *Q* consecutive sampling points preceding the current time, where *Q* is a positive integer, and a signal quality in a second time window preceding the current time.

For example, the sixth information indicates the BSR information of the first device. In some implementations, BSR-related information may include current BSR information and/or previous BSR information. For example, the BSR-related information may include one or more of: a BSR at the current time, BSRs at R consecutive sampling points preceding the current time, where R is a positive integer, and a BSR in a second time window preceding the current time.

It can be noted that, if the sixth information can include multiple information, the multiple information may be reported together or independently. For example, both information of a compiling format supported by the first device and the timing information indicating when the first device requires the first model may be contained in one radio resource control (RRC) message for transmission. For another example, the information of the compiling format supported by the first device and the timing information indicating when the first device requires the first model may be stored in two separate RRC messages for respective transmission.

In some scenarios, the sixth information may be autonomously reported by the first device. For example, after the first device switches to a new cell, the first device can send the sixth information to the second device. In some other scenarios, the sixth information may be sent by the first device according to an indication from the second device via seventh information. In other words, the sixth information may be requested by the second device via the seventh information.

With reference to FIG. 5 again, before the operations at S510, the method further includes operations at S520, i.e., the second device sends the seventh information to the first device, where the seventh information is associated with transmission of the sixth information.

In some implementations, the second device may autonomously send the seventh information. For example, the second device can periodically send the seventh information. In some other implementations, the seventh information may be triggered by a first event, i.e., the second device can send the seventh information to the first device in response to occurrence of the first event.

In some implementations, the first event may include synchronization between the first device and the second device. For example, the second device is a network device, the first device is a terminal device, the synchronization between the first device and the second device can include a downlink (DL) synchronization between the network device and the terminal device. In some other implementations, the first event may mean that the second device receives a reporting request sent by the first device, where the reporting request is used to request sending of the sixth information.

In some implementations, the seventh information includes one or more of: information indicating sending of the sixth information, information indicating a sending manner of the sixth information, and information indicating information content carried in the sixth information.

For example, the seventh information includes the information indicating the sending of the sixth information, where the information indicating the sending of the sixth information may be replaced with information indicating whether to send the sixth information. In some implementations, the information indicating the sending of the sixth information may occupy one bit in the seventh information. If a value of the bit is a first value, it indicates to send the sixth information. If the value of the bit is a second value, it indicates not to send the sixth information. The first value and the second value are different. For example, the first value may be 1, and the second value may be 0. Alternatively, the first value may be 0, and the second value may be 1. Certainly, in embodiments of the present disclosure, the information indicating the sending of the sixth information may occupy multiple bits in the seventh information.

For example, the seventh information includes the information indicating the sending manner of the sixth information, where the sending manner of the sixth information may include single reporting and/or periodic reporting. Correspondingly, the information indicating the sending manner of the sixth information indicates whether the sixth information is for single reporting or periodic reporting. Single reporting means that, the first device sends the sixth information to the second device every time the first device receives the seventh information, which can improve the flexibility of transmitting the sixth information. Periodic reporting means that the first device periodically reports the sixth information, which can reduce a resource(s) required for transmitting the sixth information.

In some implementations, if the sixth information is periodically reported, the seventh information may further carry a parameter(s) for determining periodic reporting. For example, the seventh information may include a period duration, the number of periodic transmissions, a start time of a period, etc. Certainly, the parameter(s) for determining periodic reporting may be preconfigured or predefined.

For example, the seventh information includes the information indicating the information content carried in the sixth information. For the information content carried in the sixth information, reference may be made to the introduction mentioned above. In embodiments of the present disclosure, the seventh information can indicate the information content carried in the sixth information, thereby enhancing the rationality of transmitting the sixth information. Certainly, in embodiments of the present disclosure, the information content carried in the sixth information may be predefined or preconfigured. In this case, the seventh information may not include the information indicating the information content carried in the sixth information.

It can be noted that, if the seventh information can include multiple information, the multiple information may be reported together or independently. For example, both the information indicating the information content carried in the sixth information and the information indicating the sending manner of the sixth information may be contained in one message for transmission. For another example, the information indicating the information content carried in the sixth information and the information indicating the sending manner of the sixth information may be stored in two separate messages for respective transmission.

In embodiments of the present disclosure, any information (e.g., the model information of the first model, the sixth information) mentioned above may be carried in one or more of: an NR positioning protocol A (NRPPa) message, an LPP message, an NAS message, an RRC message, a media access control control element (MAC CE), downlink control information (DCI), uplink control information (UCI), physical uplink control channel (PUCCH), physical uplink shared channel (PUSCH), an inter-node message, an Xn interface message, an F1 interface message, an E1 interface message, a next generation (NG) interface message, a CN service-based architecture message, and an AI-specific message.

In embodiments of the present disclosure, any information mentioned above may be carried in one or more of a unicast message, a multicast message, and a broadcast message.

The unicast message can be understood as one-to-one transmission information, i.e., a message sent from one sending end to one receiving end. In this case, the unicast message is transmitted from a source through a unicast channel, and only a terminal device or a network device to which a corresponding unicast resource is allocated can attempt to receive the unicast message, and thus the unicast message may also be referred to as "dedicated signaling".

The multicast message can be understood as one-to-many transmission information, i.e., a message sent from one sending end to multiple receiving ends. In this case, the multicast message is transmitted from a source through a multicast channel, a terminal device or a network device that is within the coverage of a multicast signal and is a member of the group can attempt to receive the multicast message, and when the terminal device or the network device joins a group, they will obtain a resource(s) related to the multicast channel.

The broadcast message can be understood as one-to-any transmission information, i.e., a message sent from one sending end to any receiving end. In this case, the broadcast message is transmitted from a source through a broadcast channel, and any terminal device or any network device that is within the coverage of a broadcast signal can attempt to receive the broadcast message.

As introduced above, the second device can be a network device. In some implementations, the network device is an AN device, a CN device, an AI/ML model information management device, or an OAM device. For example, the AN device may be any one of: a gNB, a centralized unit (CU), a distributed unit (DU), a centralized unit-control plane (CU-CP), and a centralized unit-user plane (CU-UP).

For example, the CN device may be any one of: an LMF element, a network slice selection function (NSSF), an authentication server function (AUSF), a unified data management (UDM), an access and mobility management function (AMF), a session management function (SMF), a policy control function (PCF), a user plane function (UPF), a sensing function (SF), and a network data analytics function (NWDAF) network element.

The method embodiments of the present disclosure are described in detail above with reference to FIG. 1 to FIG. 5, and the apparatus embodiments of the present disclosure will be described in detail below with reference to FIG. 6 to FIG. 8. It can be understood that, the apparatus embodiments and the method embodiments correspond to each other, and for similar content, reference can be made to the method embodiments.

FIG. 6 is a schematic diagram of a communication device according to embodiments of the present disclosure. The communication device 600 as illustrated in FIG. 6 is a first device, and the communication device 600 includes a receiving unit 610. The receiving unit 610 is configured to receive model information of a first model sent by a second device, where the model information of the first model includes one or more of: some or all model parameters of the first model, first information used for determining a model structure of the first model, second information associated with a compiling format for the first model, and third information associated with compression of the first model.

In some implementations, the model information of the first model includes the first information, and the first information includes one or more of: a first identifier, a second identifier, a third identifier, fourth information, and fifth information. The first identifier is a model identifier of a second model. The second identifier is a model structure identifier of the second model. The third identifier is a model module identifier of the first model. The fourth information is associated with an arrangement position of a model module in the first model. The fifth information includes module data of some model modules in the first model. The second model is the first model, or the first model is determined based on the second model.

In some implementations, the model information of the first model includes the first identifier and some or all model parameters of the first model.

In some implementations, the model information of the first model includes the second identifier and some or all model parameters of the first model.

In some implementations, the model information of the first model includes the third identifier and some or all model parameters of the first model.

In some implementations, the model information of the first model further includes the fourth information.

In some implementations, the first model is determined based on the second model. The model information of the first model further includes the first identifier, and a model module associated with the third identifier is a model module to be deleted from the second model. Alternatively, the model information of the first model further includes the first identifier, and the model module associated with the third identifier is a model module to be added to the second model. Alternatively, the model information of the first model further includes the second identifier, and the model module associated with the third identifier is a model module to be deleted from a model structure of the second model. Alternatively, the model information of the first model further includes the second identifier, and the model module associated with the third identifier is a model module to be added to the model structure of the second model.

In some implementations, the first model is determined based on the second model. A model module associated with the third identifier is a model module to be deleted from the second model when only one second model is stored in the first device. Alternatively, the model module associated with the third identifier is a model module to be added to the second model when only one second model is stored in the first device. Alternatively, the model module associated with the third identifier is a model module to be deleted from a model structure of the second model when only a model structure of one second model is stored in the first device. Alternatively, the model module associated with the third identifier is a model module to be added to the model structure of the second model when only a model structure of one second model is stored in the first device.

In some implementations, the model information of the first model includes a target identifier, some or all model parameters of the first model, and the fifth information, where the target identifier includes one or more of the first identifier, the second identifier, and the third identifier.

In some implementations, the model information of the first model includes the second information, and the second information includes one or more of: information indicating a compiling format for model data of the first model, information indicating whether the model data of the first model is subjected to compiling format conversion, information indicating a compiling format used for the model data of the first model before compiling format conversion, information indicating a compiling format used for the model data of the first model after compiling format conversion, and information indicating a compiling format to be used for the model data of the first model when running on the first device.

In some implementations, the second information indicates that the model data of the first model is model data subjected to compiling format conversion, and the model data of the first model is model data of the first model subjected to compiling format conversion.

In some implementations, the second information indicates that the first model is a model subjected to compiling format conversion, and the second information further includes the first model subjected to compiling format conversion.

In some implementations, the compiling format associated with the second information is a first compiling format, where the first compiling format belongs to multiple compiling formats supported by the first device, and the first compiling format among the multiple compiling formats corresponds to the smallest amount of model data.

In some implementations, the model information of the first model includes the third information, and the model information of the first model includes a compressed first model.

In some implementations, the model information of the first model includes the third information, and model data of the first model included in the model information of the first model is compressed model data.

In some implementations, model data of the first model is subjected to compiling format conversion.

In some implementations, the third information includes one or more of: information indicating that the model data of the first model is compressed model data, information indicating performance of the first model, and information indicating a compression format for the first model.

In some implementations, a compression format for the first model includes bitstream compression and/or model compression.

In some implementations, the compression format for the first model is that bitstream compression is performed on a compressed first model.

In some implementations, the model data of the first model includes one or more of the following included in the model information of the first model: model structure data of the first model, model module data of the first model, and some or all model parameters of the first model.

In some implementations, the communication device further includes a sending unit. The sending unit is configured to send sixth information to the second device, where the sixth information indicates one or more of: capability information associated with the first model, time information indicating when the first device requires the first model, model-related information stored in the first device, a requirement of the first device for performance of the first model, whether the first device supports model compression, information associated with data arrival in the first device, position information of the first device, serving cell information of the first device, neighboring cell information of the first device, and BSR information of the first device.

In some implementations, the sixth information indicates the capability information, and the capability information indicates one or more of: whether the first device is capable of accelerating model inference, storage space available for model inference in the first device, computational capacity available for model inference in the first device, battery power available for model inference in the first device, and a model compression format supported by the first device.

In some implementations, the sixth information indicates model-related information stored in the first device, where the stored model-related information includes one or more of: the number of stored models, a stored model identifier, a stored model structure identifier, the number of stored model structures, and stored model module information.

In some implementations, the receiving unit is configured to receive seventh information sent by the second device, where the seventh information is associated with transmission of the sixth information.

In some implementations, the seventh information includes one or more of: information indicating sending of the sixth information, information indicating a sending manner of the sixth information, and information indicating information content carried in the sixth information.

In some implementations, the first device is a terminal device, and the second device is a network device.

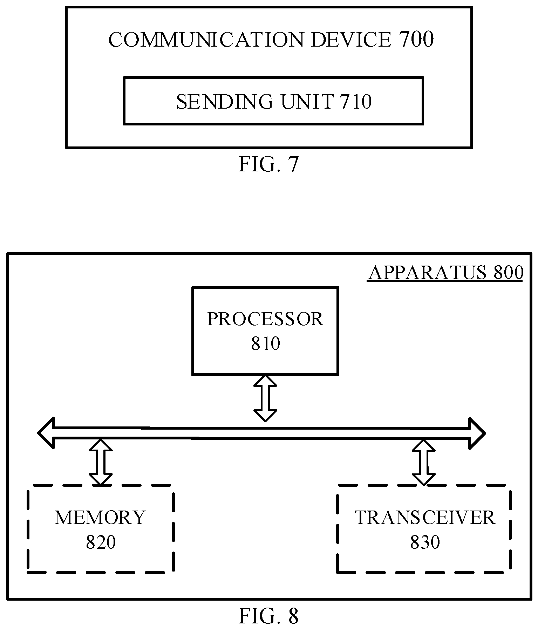

FIG. 7 is a schematic diagram of a communication device according to embodiments of the present disclosure. The communication device 700 as illustrated in FIG. 7 is a second device, and the communication device 700 includes a sending unit 710. The sending unit 710 is configured to send model information of a first model to a first device, where the model information of the first model includes one or more of: some or all model parameters of the first model, first information used for determining a model structure of the first model, second information associated with a compiling format for the first model, and third information associated with compression of the first model.

In some implementations, the model information of the first model includes the first information, and the first information includes one or more of: a first identifier, a second identifier, a third identifier, fourth information, and fifth information. The first identifier is a model identifier of a second model. The second identifier is a model structure identifier of the second model. The third identifier is a model module identifier of the first model. The fourth information is associated with an arrangement position of a model module in the first model. The fifth information includes module data of some model modules in the first model. The second model is the first model, or the first model is determined based on the second model.

In some implementations, the model information of the first model includes the first identifier and some or all model parameters of the first model.

In some implementations, the model information of the first model includes the second identifier and some or all model parameters of the first model.

In some implementations, the model information of the first model includes the third identifier and some or all model parameters of the first model.

In some implementations, the model information of the first model further includes the fourth information.

In some implementations, the first model is determined based on the second model. The model information of the first model further includes the first identifier, and a model module associated with the third identifier is a model module to be deleted from the second model. Alternatively, the model information of the first model further includes the first identifier, and the model module associated with the third identifier is a model module to be added to the second model. Alternatively, the model information of the first model further includes the second identifier, and the model module associated with the third identifier is a model module to be deleted from a model structure of the second model. Alternatively, the model information of the first model further includes the second identifier, and the model module associated with the third identifier is a model module to be added to the model structure of the second model.

In some implementations, the first model is determined based on the second model. A model module associated with the third identifier is a model module to be deleted from the second model when only one second model is stored in the first device. Alternatively, the model module associated with the third identifier is a model module to be added to the second model when only one second model is stored in the first device. Alternatively, the model module associated with the third identifier is a model module to be deleted from a model structure of the second model when only a model structure of one second model is stored in the first device. Alternatively, the model module associated with the third identifier is a model module to be added to the model structure of the second model when only a model structure of one second model is stored in the first device.

In some implementations, the model information of the first model includes a target identifier, some or all model parameters of the first model, and the fifth information, where the target identifier includes one or more of the first identifier, the second identifier, and the third identifier.

In some implementations, the model information of the first model includes the second information, and the second information includes one or more of: information indicating a compiling format for model data of the first model, information indicating whether the model data of the first model is subjected to compiling format conversion, information indicating a compiling format used for the model data of the first model before compiling format conversion, information indicating a compiling format used for the model data of the first model after compiling format conversion, and information indicating a compiling format to be used for the model data of the first model when running on the first device.

In some implementations, the second information indicates that the model data of the first model is model data subjected to compiling format conversion, and the model data of the first model is model data of the first model subjected to compiling format conversion.

In some implementations, the second information indicates that the first model is a model subjected to compiling format conversion, and the second information further includes the first model subjected to compiling format conversion.

In some implementations, the compiling format associated with the second information is a first compiling format, where the first compiling format belongs to multiple compiling formats supported by the first device, and the first compiling format among the multiple compiling formats corresponds to the smallest amount of model data.

In some implementations, the model information of the first model includes the third information, and the model information of the first model includes a compressed first model.

In some implementations, the model information of the first model includes the third information, and model data of the first model included in the model information of the first model is compressed model data.

In some implementations, model data of the first model is subjected to compiling format conversion.

In some implementations, the third information includes one or more of: information indicating that the model data of the first model is compressed model data, information indicating performance of the first model, and information indicating a compression format for the first model.

In some implementations, a compression format for the first model includes bitstream compression and/or model compression.

In some implementations, the compression format for the first model is that bitstream compression is performed on a compressed first model.

In some implementations, the model data of the first model includes one or more of the following included in the model information of the first model: model structure data of the first model, model module data of the first model, and some or all model parameters of the first model.

In some implementations, the communication device further includes a sending unit. The sending unit is configured to send sixth information to the second device, where the sixth information indicates one or more of: capability information associated with the first model, time information indicating when the first device requires the first model, model-related information stored in the first device, a requirement of the first device for performance of the first model, whether the first device supports model compression, information associated with data arrival in the first device, position information of the first device, serving cell information of the first device, neighboring cell information of the first device, and BSR information of the first device.

In some implementations, the sixth information indicates the capability information, and the capability information indicates one or more of: whether the first device is capable of accelerating model inference, storage space available for model inference in the first device, computational capacity available for model inference in the first device, battery power available for model inference in the first device, and a model compression format supported by the first device.

In some implementations, the sixth information indicates model-related information stored in the first device, where the stored model-related information includes one or more of: the number of stored models, a stored model identifier, a stored model structure identifier, the number of stored model structures, and stored model module information.

In some implementations, the sending unit is configured to send seventh information to the first device, where the seventh information is associated with transmission of the sixth information.

In some implementations, the seventh information includes one or more of: information indicating sending of the sixth information, information indicating a sending manner of the sixth information, and information indicating information content carried in the sixth information.

In some implementations, the first device is a terminal device, and the second device is a network device.

In an optional embodiment, the receiving unit 610 may be a transceiver 830. The communication device 600 may further include a transceiver 830 and a processor 810, as specifically illustrated in FIG. 8.

In an optional embodiment, the sending unit 710 may be the transceiver 830. The communication device 700 may further include the transceiver 830 and the processor 810, as specifically illustrated in FIG. 8.

FIG. 8 is a schematic structural diagram of a communication apparatus provided in embodiments of the present disclosure. Dotted lines illustrated in FIG. 8 indicate that a unit or a module is optional. The apparatus 800 can be configured to implement the method illustrated in the method embodiments. The apparatus 800 may be a chip, a terminal device, or a network device.

The apparatus 800 may include one or more processors 88. The processor 88 may support the apparatus 800 to implement the method illustrated in the method embodiments. The processor 88 may be a general-purpose processor or a special-purpose processor. For example, the processor may be a central processing unit (CPU). Alternatively, the processor may also be another general-purpose processor, a digital signal processor (DSP), an ASIC, a field programmable gate array (FPGA), or other programmable logic devices, discrete gates or transistor logic devices, discrete hardware components, etc. The general-purpose processor may be a microprocessor, or the processor may be any conventional processor, etc.

The apparatus 800 may further include one or more memories 820. The memory 820 is configured to store a program which, when executed by the processor 88, causes the processor 88 to perform the method illustrated in the method embodiments. The memory 820 may be independent of the processor 88 or may be integrated into the processor 88.

The apparatus 800 may further include a transceiver 830. The processor 88 may communicate with other devices or chips through the transceiver 830. For example, the processor 88 may send data to and receive data from other devices or chips through the transceiver 830.

A computer-readable storage medium is further provided in embodiments of the present disclosure. The computer-readable storage medium is configured to store a program. The computer-readable storage medium is applicable to the terminal or the network device provided in embodiments of the present disclosure. The program causes a computer to perform the method performed by the terminal or the network device in various embodiments of the present disclosure.

A computer program product is further provided in embodiments of the present disclosure. The computer program product includes a program. The computer program product is applicable to the terminal or the network device provided in embodiments of the present disclosure. The program causes a computer to perform the method performed by the terminal or the network device in various embodiments of the present disclosure.

A computer program is further provided in embodiments of the present disclosure. The computer program is applicable to the terminal or the network device provided in embodiments of the present disclosure. The computer program causes a computer to perform the method performed by the terminal or the network device in various embodiments of the present disclosure.

It may be understood that, the terms "system" and "network" herein are usually used interchangeably throughout this disclosure. In addition, terms used in the present disclosure are merely intended for explaining embodiments of the present disclosure rather than limiting the present disclosure. The terms "first", "second", "third", "fourth", and the like used in the specification, the claims, and the accompanying drawings of the present disclosure are used to distinguish different objects rather than describe a particular order. In addition, the terms "include", "comprise", and "have" as well as variations thereof are intended to cover a non-exclusive inclusion.

In embodiments of the present disclosure, "indication" mentioned may be a direct indication, may be an indirect indication, or may mean that there is an association relationship. For example, A indicates B may mean that A directly indicates B, for instance, B can be obtained according to A; may mean that A indirectly indicates B, for instance, A indicates C, and B can be obtained according to C; or may mean that there is an association relationship between A and B.

In embodiments of the present disclosure, "B corresponding to A" indicates that B is associated with A, and B may be determined according to A. However, it may be further understood that, "determine B according to A" does not mean that B is determined according to A only, and B may also be determined according to A and/or other information.

In embodiments of the present disclosure, the term "correspondence" may mean that there is a direct or indirect correspondence between the two, may mean that there is an association between the two, may mean a relationship of indicating and indicated or configuring and configured, etc.

In embodiments of the present disclosure, "pre-defined" or "pre-configured" can be implemented by pre-saving a corresponding code or table in a device (for example, including the terminal device and the network device) or in other manners that can be used for indicating related information, and the present disclosure is not limited in this regard. For example, the "pre-defined" may mean defined in a protocol.

In embodiments of the present disclosure, the "protocol" may refer to a communication standard protocol, which may include, for example, an LTE protocol, an NR protocol, and a protocol applied to a future communication system, and the present disclosure is not limited in this regard.

It may be understood that, the term "and/or" herein only describes an association relationship between associated objects, which means that there can be three relationships. For example, A and/or B can mean A alone, both A and B exist, and B alone. In addition, the character "/" herein generally indicates that the associated objects are in an "or" relationship.

In various embodiments of the present disclosure, the magnitude of a sequence number of each of the foregoing processes does not mean an execution order, and an execution order of each process may be determined according to a function and an internal logic of the process, which shall not constitute any limitation to an embodiment process of embodiments of the present disclosure.

It will be appreciated that, the systems, apparatuses, and methods disclosed in embodiments of the present disclosure may also be implemented in various other manners. For example, the above apparatus embodiments are merely illustrative, e.g., the division of units is only a division of logical functions, and other manners of division may be available in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface, device, or unit, and may be electrical, mechanical, or otherwise.

Separated units as illustrated may or may not be physically separated. Components displayed as units may or may not be physical units, and may reside at one location or may be distributed to multiple networked units. Some or all of the units may be selectively adopted according to practical needs to achieve desired objectives of the present disclosure.

In addition, various functional units described in various embodiments of the present disclosure may be integrated into one processing unit or may be present as a number of physically separated units, and two or more units may be integrated into one.

All or some of the above embodiments can be implemented through software, hardware, firmware, or any other combination thereof. When implemented by software, all or some of the above embodiments can be implemented in the form of a computer program product. The computer program product includes one or more computer instructions. When the computer instructions are applied and executed on a computer, all or some of the operations or functions of embodiments of the present disclosure are performed. The computer may be a general-purpose computer, a special-purpose computer, a computer network, or other programmable apparatuses. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center in a wired manner or in a wireless manner. Examples of the wired manner may be a coaxial cable, an optical fiber, a digital subscriber line (DSL), etc. The wireless manner may be, for example, infrared, wireless, microwave, etc. The computer-readable storage medium may be any computer-accessible usable medium or a data storage device, such as a server, a data center, etc., that integrates one or more usable media. The usable medium may be a magnetic medium (such as a soft disk, a hard disk, or a magnetic tape), an optical medium (such as a digital video disc (DVD)), a semiconductor medium (such as a solid state disk (SSD)), etc.

The foregoing elaborations are merely embodiments of the present disclosure, but are not intended to limit the protection scope of the present disclosure. Any variation or replacement easily thought of by those skilled in the art within the technical scope disclosed in the present disclosure shall belong to the protection scope of the present disclosure. Therefore, the protection scope of the present disclosure shall be subject to the protection scope of the claims.

## Claims

1. A method for model transmission, comprising:
receiving, by a first device, model information of a first model sent by a second device, wherein the model information of the first model comprises one or more of:
some or all model parameters of the first model;
first information used for determining a model structure of the first model;
second information associated with a compiling format for the first model; and
third information associated with compression of the first model.

2. The method of claim 1, wherein the model information of the first model comprises the first information, and the first information comprises one or more of:
a first identifier, wherein the first identifier is a model identifier of a second model;
a second identifier, wherein the second identifier is a model structure identifier of the second model;
a third identifier, wherein the third identifier is a model module identifier of the first model;
fourth information associated with an arrangement position of a model module in the first model; and
fifth information comprising module data of some model modules in the first model;
wherein the second model is the first model, or the first model is determined based on the second model.

3. The method of claim 2, wherein the model information of the first model comprises the first identifier and some or all model parameters of the first model.

4. The method of claim 2, wherein the model information of the first model comprises the second identifier and some or all model parameters of the first model.

5. The method of claim 2, wherein the model information of the first model comprises the third identifier and some or all model parameters of the first model.

6. The method of claim 5, wherein the model information of the first model further comprises the fourth information.

7. The method of claim 5 or 6, wherein the first model is determined based on the second model, wherein
the model information of the first model further comprises the first identifier, and a model module associated with the third identifier is a model module to be deleted from the second model; or
the model information of the first model further comprises the first identifier, and the model module associated with the third identifier is a model module to be added to the second model; or
the model information of the first model further comprises the second identifier, and the model module associated with the third identifier is a model module to be deleted from a model structure of the second model; or
the model information of the first model further comprises the second identifier, and the model module associated with the third identifier is a model module to be added to the model structure of the second model.

8. The method of claim 5 or 6, wherein the first model is determined based on the second model, wherein
a model module associated with the third identifier is a model module to be deleted from the second model when only one second model is stored in the first device; or
the model module associated with the third identifier is a model module to be added to the second model when only one second model is stored in the first device; or
the model module associated with the third identifier is a model module to be deleted from a model structure of the second model when only a model structure of one second model is stored in the first device; or
the model module associated with the third identifier is a model module to be added to the model structure of the second model when only a model structure of one second model is stored in the first device.

9. The method of claim 2, wherein the model information of the first model comprises a target identifier, some or all model parameters of the first model, and the fifth information, wherein the target identifier comprises one or more of the first identifier, the second identifier, and the third identifier.

10. The method of any one of claims 1 to 9, wherein the model information of the first model comprises the second information, and the second information comprises one or more of:
information indicating a compiling format for model data of the first model;
information indicating whether the model data of the first model is subjected to compiling format conversion;
information indicating a compiling format used for the model data of the first model before compiling format conversion;
information indicating a compiling format used for the model data of the first model after compiling format conversion; and
information indicating a compiling format to be used for the model data of the first model when running on the first device.

11. The method of claim 10, wherein the second information indicates that the model data of the first model is model data subjected to compiling format conversion, and the model data of the first model is model data of the first model subjected to compiling format conversion.

12. The method of claim 1, wherein the second information indicates that the first model is a model subjected to compiling format conversion, and the second information further comprises the first model subjected to compiling format conversion.

13. The method of any one of claims 1 to 12, wherein the compiling format associated with the second information is a first compiling format, wherein the first compiling format belongs to a plurality of compiling formats supported by the first device, and the first compiling format among the plurality of compiling formats corresponds to a smallest amount of model data.

14. The method of claim 1, wherein the model information of the first model comprises the third information, and the model information of the first model comprises a compressed first model.

15. The method of any one of claims 1 to 13, wherein the model information of the first model comprises the third information, and model data of the first model comprised in the model information of the first model is compressed model data.

16. The method of claim 14 or 15, wherein model data of the first model is subjected to compiling format conversion.

17. The method of claim 15 or 16, wherein the third information comprises one or more of:
information indicating that the model data of the first model is compressed model data;
information indicating performance of the first model; and
information indicating a compression format for the first model.

18. The method of any one of claims 14 to 17, wherein a compression format for the first model comprises bitstream compression and/or model compression.

19. The method of claim 18, wherein the compression format for the first model is that bitstream compression is performed on a compressed first model.

20. The method of any one of claims 10 to 11 and 15 to 17, wherein the model data of the first model comprises one or more of the following comprised in the model information of the first model:
model structure data of the first model;
model module data of the first model; and
some or all model parameters of the first model.

21. The method of any one of claims 1 to 20, wherein before receiving, by the first device, the model information of the first model sent by the second device, the method further comprises:
sending, by the first device, sixth information to the second device, wherein the sixth information indicates one or more of:
capability information associated with the first model;
time information indicating when the first device requires the first model;
model-related information stored in the first device;
a requirement of the first device for performance of the first model;
whether the first device supports model compression;
information associated with data arrival in the first device;
position information of the first device;
serving cell information of the first device;
neighboring cell information of the first device; and
buffer status report (BSR) information of the first device.

22. The method of claim 21, wherein the sixth information indicates the capability information, and the capability information indicates one or more of:
whether the first device is capable of accelerating model inference;
storage space available for model inference in the first device;
computational capacity available for model inference in the first device;
battery power available for model inference in the first device; and
a model compression format supported by the first device.

23. The method of claim 21 or 22, wherein the sixth information indicates model-related information stored in the first device, wherein the stored model-related information comprises one or more of: a number of stored models; a stored model identifier; a stored model structure identifier; a number of stored model structures; and stored model module information.

24. The method of any one of claims 21 to 23, wherein before sending, by the first device, the sixth information to the second device, the method further comprises:
receiving, by the first device, seventh information sent by the second device, wherein the seventh information is associated with transmission of the sixth information.

25. The method of claim 24, wherein the seventh information comprises one or more of:
information indicating sending of the sixth information;
information indicating a sending manner of the sixth information; and
information indicating information content carried in the sixth information.

26. The method of any one of claims 1 to 25, wherein the first device is a terminal device, and the second device is a network device.

27. A method for model transmission, comprising:
sending, by a second device, model information of a first model to a first device, wherein the model information of the first model comprises one or more of:
some or all model parameters of the first model;
first information used for determining a model structure of the first model;
second information associated with a compiling format for the first model; and
third information associated with compression of the first model.

28. The method of claim 27, wherein the model information of the first model comprises the first information, and the first information comprises one or more of:
a first identifier, wherein the first identifier is a model identifier of a second model;
a second identifier, wherein the second identifier is a model structure identifier of the second model;
a third identifier, wherein the third identifier is a model module identifier of the first model;
fourth information associated with an arrangement position of a model module in the first model; and
fifth information comprising module data of some model modules in the first model;
wherein the second model is the first model, or the first model is determined based on the second model.

29. The method of claim 27, wherein the model information of the first model comprises the first identifier and some or all model parameters of the first model.

30. The method of claim 27, wherein the model information of the first model comprises the second identifier and some or all model parameters of the first model.

31. The method of claim 27, wherein the model information of the first model comprises the third identifier and some or all model parameters of the first model.

32. The method of claim 31, wherein the model information of the first model further comprises the fourth information.

33. The method of claim 31 or 32, wherein the first model is determined based on the second model, wherein
the model information of the first model further comprises the first identifier, and a model module associated with the third identifier is a model module to be deleted from the second model; or
the model information of the first model further comprises the first identifier, and the model module associated with the third identifier is a model module to be added to the second model; or
the model information of the first model further comprises the second identifier, and the model module associated with the third identifier is a model module to be deleted from a model structure of the second model; or
the model information of the first model further comprises the second identifier, and the model module associated with the third identifier is a model module to be added to the model structure of the second model.

34. The method of claim 31 or 32, wherein the first model is determined based on the second model, wherein
a model module associated with the third identifier is a model module to be deleted from the second model when only one second model is stored in the first device; or
the model module associated with the third identifier is a model module to be added to the second model when only one second model is stored in the first device; or
the model module associated with the third identifier is a model module to be deleted from a model structure of the second model when only a model structure of one second model is stored in the first device; or
the model module associated with the third identifier is a model module to be added to the model structure of the second model when only a model structure of one second model is stored in the first device.

35. The method of claim 28, wherein the model information of the first model comprises a target identifier, some or all model parameters of the first model, and the fifth information, wherein the target identifier comprises one or more of the first identifier, the second identifier, and the third identifier.

36. The method of any one of claims 27 to 35, wherein the model information of the first model comprises the second information, and the second information comprises one or more of:
information indicating a compiling format for model data of the first model;
information indicating whether the model data of the first model is subjected to compiling format conversion;
information indicating a compiling format used for the model data of the first model before compiling format conversion;
information indicating a compiling format used for the model data of the first model after compiling format conversion; and
information indicating a compiling format to be used for the model data of the first model when running on the first device.

37. The method of claim 36, wherein the second information indicates that the model data of the first model is model data subjected to compiling format conversion, and the model data of the first model is model data of the first model subjected to compiling format conversion.

38. The method of claim 27, wherein the second information indicates that the first model is a model subjected to compiling format conversion, and the second information further comprises the first model subjected to compiling format conversion.

39. The method of any one of claims 27 to 38, wherein the compiling format associated with the second information is a first compiling format, wherein the first compiling format belongs to a plurality of compiling formats supported by the first device, and the first compiling format among the plurality of compiling formats corresponds to a smallest amount of model data.

40. The method of claim 27, wherein the model information of the first model comprises the third information, and the model information of the first model comprises a compressed first model.

41. The method of any one of claims 27 to 39, wherein the model information of the first model comprises the third information, and model data of the first model comprised in the model information of the first model is compressed model data.

42. The method of claim 40 or 41, wherein the model data of the first model undergoes compiling format conversion.

43. The method of claim 41 or 42, wherein the third information comprises one or more of:
information indicating that the model data of the first model is compressed model data;
information indicating performance of the first model; and
information indicating a compression format for the first model.

44. The method of any one of claims 40 to 43, wherein a compression format for the first model comprises bitstream compression and/or model compression.

45. The method of claim 44, wherein the compression format for the first model is that bitstream compression is performed on a compressed first model.

46. The method of any one of claims 36 to 37 and 41 to 43, wherein the model data of the first model comprises one or more of the following comprised in the model information of the first model:
model structure data of the first model;
model module data of the first model; and
some or all model parameters of the first model.

47. The method of any one of claims 27 to 46, wherein before receiving, by the first device, the model information of the first model sent by the second device, the method further comprises:
receiving, by the second device, sixth information sent by the first device, wherein the sixth information indicates one or more of:
capability information associated with the first model;
time information indicating when the first device requires the first model;
model-related information stored in the first device;
a requirement of the first device for performance of the first model;
whether the first device supports model compression;
information associated with data arrival in the first device;
position information of the first device;
serving cell information of the first device;
neighboring cell information of the first device; and
buffer status report (BSR) information of the first device.

48. The method of claim 47, wherein the sixth information indicates the capability information, and the capability information indicates one or more of:
whether the first device is capable of accelerating model inference;
storage space available for model inference in the first device;
computational capacity available for model inference in the first device;
battery power available for model inference in the first device; and
a model compression format supported by the first device.

49. The method of claim 47 or 48, wherein the sixth information indicates model-related information stored in the first device, wherein the stored model-related information comprises one or more of: a number of stored models; a stored model identifier; a stored model structure identifier; a number of stored model structures; and stored model module information.

50. The method of any one of claims 47 to 49, wherein before sending, by the first device, the sixth information to the second device, the method further comprises:
sending, by the second device, seventh information to the first device, wherein the seventh information is associated with transmission of the sixth information.

51. The method of claim 50, wherein the seventh information comprises one or more of:
information indicating sending of the sixth information;
information indicating a sending manner of the sixth information; and
information indicating information content carried in the sixth information.

52. The method of any one of claims 27 to 51, wherein the first device is a terminal device, and the second device is a network device.

53. A communication device, being a first device and comprising:
a receiving unit configured to receive model information of a first model sent by a second device, wherein the model information of the first model comprises one or more of:
some or all model parameters of the first model;
first information used for determining a model structure of the first model;
second information associated with a compiling format for the first model; and
third information associated with compression of the first model.

54. The communication device of claim 53, wherein the model information of the first model comprises the first information, and the first information comprises one or more of:
a first identifier, wherein the first identifier is a model identifier of a second model;
a second identifier, wherein the second identifier is a model structure identifier of the second model;
a third identifier, wherein the third identifier is a model module identifier of the first model;
fourth information associated with an arrangement position of a model module in the first model; and
fifth information comprising module data of some model modules in the first model;
wherein the second model is the first model, or the first model is determined based on the second model.

55. The communication device of claim 54, wherein the model information of the first model comprises the first identifier and some or all model parameters of the first model.

56. The communication device of claim 54, wherein the model information of the first model comprises the second identifier and some or all model parameters of the first model.

57. The communication device of claim 54, wherein the model information of the first model comprises the third identifier and some or all model parameters of the first model.

58. The communication device of claim 57, wherein the model information of the first model further comprises the fourth information.

59. The communication device of claim 57 or 58, wherein the first model is determined based on the second model, wherein
the model information of the first model further comprises the first identifier, and a model module associated with the third identifier is a model module to be deleted from the second model; or
the model information of the first model further comprises the first identifier, and the model module associated with the third identifier is a model module to be added to the second model; or
the model information of the first model further comprises the second identifier, and the model module associated with the third identifier is a model module to be deleted from a model structure of the second model; or
the model information of the first model further comprises the second identifier, and the model module associated with the third identifier is a model module to be added to the model structure of the second model.

60. The communication device of claim 57 or 58, wherein the first model is determined based on the second model, wherein
a model module associated with the third identifier is a model module to be deleted from the second model when only one second model is stored in the first device; or
the model module associated with the third identifier is a model module to be added to the second model when only one second model is stored in the first device; or
the model module associated with the third identifier is a model module to be deleted from a model structure of the second model when only a model structure of one second model is stored in the first device; or
the model module associated with the third identifier is a model module to be added to the model structure of the second model when only a model structure of one second model is stored in the first device.

61. The communication device of claim 54, wherein the model information of the first model comprises a target identifier, some or all model parameters of the first model, and the fifth information, wherein the target identifier comprises one or more of the first identifier, the second identifier, and the third identifier.

62. The communication device of any one of claims 53 to 61, wherein the model information of the first model comprises the second information, and the second information comprises one or more of:
information indicating a compiling format for model data of the first model;
information indicating whether the model data of the first model is subjected to compiling format conversion;
information indicating a compiling format used for the model data of the first model before compiling format conversion;
information indicating a compiling format used for the model data of the first model after compiling format conversion; and
information indicating a compiling format to be used for the model data of the first model when running on the first device.

63. The communication device of claim 62, wherein the second information indicates that the model data of the first model is model data subjected to compiling format conversion, and the model data of the first model is model data of the first model subjected to compiling format conversion.

64. The communication device of claim 53, wherein the second information indicates that the first model is a model subjected to compiling format conversion, and the second information further comprises the first model subjected to compiling format conversion.

65. The communication device of any one of claims 53 to 64, wherein the compiling format associated with the second information is a first compiling format, wherein the first compiling format belongs to a plurality of compiling formats supported by the first device, and the first compiling format among the plurality of compiling formats corresponds to a smallest amount of model data.

66. The communication device of claim 53, wherein the model information of the first model comprises the third information, and the model information of the first model comprises a compressed first model.

67. The communication device of any one of claims 53 to 65, wherein the model information of the first model comprises the third information, and model data of the first model comprised in the model information of the first model is compressed model data.

68. The communication device of claim 66 or 67, wherein model data of the first model is subjected to compiling format conversion.

69. The communication device of claim 67 or 68, wherein the third information comprises one or more of:
information indicating that the model data of the first model is compressed model data;
information indicating performance of the first model; and
information indicating a compression format for the first model.

70. The communication device of any one of claims 66 to 69, wherein a compression format for the first model comprises bitstream compression and/or model compression.

71. The communication device of claim 70, wherein the compression format for the first model is that bitstream compression is performed on a compressed first model.

72. The communication device of any one of claims 62 to 63 and 67 to 69, wherein the model data of the first model comprises one or more of the following comprised in the model information of the first model:
model structure data of the first model;
model module data of the first model; and
some or all model parameters of the first model.

73. The communication device of any one of claims 53 to 72, wherein the communication device further comprises:
a sending unit configured to send sixth information to the second device, wherein the sixth information indicates one or more of:
capability information associated with the first model;
time information indicating when the first device requires the first model;
model-related information stored in the first device;
a requirement of the first device for performance of the first model;
whether the first device supports model compression;
information associated with data arrival in the first device;
position information of the first device;
serving cell information of the first device;
neighboring cell information of the first device; and
buffer status report (BSR) information of the first device.

74. The communication device of claim 73, wherein the sixth information indicates the capability information, and the capability information indicates one or more of:
whether the first device is capable of accelerating model inference;
storage space available for model inference in the first device;
computational capacity available for model inference in the first device;
battery power available for model inference in the first device; and
a model compression format supported by the first device.

75. The communication device of claim 73 or 74, wherein the sixth information indicates model-related information stored in the first device, wherein the stored model-related information comprises one or more of: a number of stored models; a stored model identifier; a stored model structure identifier; a number of stored model structures; and stored model module information.

76. The communication device of any one of claims 73 to 75, wherein the receiving unit is configured to:
receive seventh information sent by the second device, wherein the seventh information is associated with transmission of the sixth information.

77. The communication device of claim 76, wherein the seventh information comprises one or more of:
information indicating sending of the sixth information;
information indicating a sending manner of the sixth information; and
information indicating information content carried in the sixth information.

78. The communication device of any one of claims 53 to 77, wherein the first device is a terminal device, and the second device is a network device.

79. A communication device, being a second device and comprising:
a sending unit configured to send model information of a first model to a first device, wherein the model information of the first model comprises one or more of:
some or all model parameters of the first model;
first information used for determining a model structure of the first model;
second information associated with a compiling format for the first model; and
third information associated with compression of the first model.

80. The communication device of claim 79, the model information of the first model comprises the first information, and the first information comprises one or more of:
a first identifier, wherein the first identifier is a model identifier of a second model;
a second identifier, wherein the second identifier is a model structure identifier of the second model;
a third identifier, wherein the third identifier is a model module identifier of the first model;
fourth information associated with an arrangement position of a model module in the first model; and
fifth information comprising module data of some model modules in the first model;
wherein the second model is the first model, or the first model is determined based on the second model.

81. The communication device of claim 79, wherein the model information of the first model comprises the first identifier and some or all model parameters of the first model.

82. The communication device of claim 79, wherein the model information of the first model comprises the second identifier and some or all model parameters of the first model.

83. The communication device of claim 79, wherein the model information of the first model comprises the third identifier and some or all model parameters of the first model.

84. The communication device of claim 83, wherein the model information of the first model further comprises the fourth information.

85. The communication device of claim 83 or 84, wherein the first model is determined based on the second model, wherein
the model information of the first model further comprises the first identifier, and a model module associated with the third identifier is a model module to be deleted from the second model; or
the model information of the first model further comprises the first identifier, and the model module associated with the third identifier is a model module to be added to the second model; or
the model information of the first model further comprises the second identifier, and the model module associated with the third identifier is a model module to be deleted from a model structure of the second model; or
the model information of the first model further comprises the second identifier, and the model module associated with the third identifier is a model module to be added to the model structure of the second model.

86. The communication device of claim 83 or 84, wherein the first model is determined based on the second model, wherein
a model module associated with the third identifier is a model module to be deleted from the second model when only one second model is stored in the first device; or
the model module associated with the third identifier is a model module to be added to the second model when only one second model is stored in the first device; or
the model module associated with the third identifier is a model module to be deleted from a model structure of the second model when only a model structure of one second model is stored in the first device; or
the model module associated with the third identifier is a model module to be added to the model structure of the second model when only a model structure of one second model is stored in the first device.

87. The communication device of claim 80, wherein the model information of the first model comprises a target identifier, some or all model parameters of the first model, and the fifth information, wherein the target identifier comprises one or more of the first identifier, the second identifier, and the third identifier.

88. The communication device of any one of claims 79 to 87, wherein the model information of the first model comprises the second information, and the second information comprises one or more of:
information indicating a compiling format for model data of the first model;
information indicating whether the model data of the first model is subjected to compiling format conversion;
information indicating a compiling format used for the model data of the first model before compiling format conversion;
information indicating a compiling format used for the model data of the first model after compiling format conversion; and
information indicating a compiling format to be used for the model data of the first model when running on the first device.

89. The communication device of claim 88, wherein the second information indicates that the model data of the first model is model data subjected to compiling format conversion, and the model data of the first model is model data of the first model subjected to compiling format conversion.

90. The communication device of claim 79, wherein the second information indicates that the first model is a model subjected to compiling format conversion, and the second information further comprises the first model subjected to compiling format conversion.

91. The communication device of any one of claims 79 to 90, wherein the compiling format associated with the second information is a first compiling format, wherein the first compiling format belongs to a plurality of compiling formats supported by the first device, and the first compiling format among the plurality of compiling formats corresponds to a smallest amount of model data.

92. The communication device of claim 79, wherein the model information of the first model comprises the third information, and the model information of the first model comprises a compressed first model.

93. The communication device of any one of claims 79 to 91, wherein the model information of the first model comprises the third information, and model data of the first model comprised in the model information of the first model is compressed model data.

94. The communication device of claim 92 or 93, wherein the model data of the first model undergoes compiling format conversion.

95. The communication device of claim 93 or 94, wherein the third information comprises one or more of:
information indicating that the model data of the first model is compressed model data;
information indicating performance of the first model; and
information indicating a compression format for the first model.

96. The communication device of any one of claims 92 to 95, wherein a compression format for the first model comprises bitstream compression and/or model compression.

97. The communication device of claim 96, wherein the compression format for the first model is that bitstream compression is performed on a compressed first model.

98. The communication device of any one of claims 88 to 89 and 93 to 95, wherein the model data of the first model comprises one or more of the following comprised in the model information of the first model:
model structure data of the first model;
model module data of the first model; and
some or all model parameters of the first model.

99. The communication device of any one of claims 79 to 98, wherein the communication device further comprises:
a receiving unit configured to receive sixth information sent by the first device, wherein the sixth information indicates one or more of:
capability information associated with the first model;
time information indicating when the first device requires the first model;
model-related information stored in the first device;
a requirement of the first device for performance of the first model;
whether the first device supports model compression;
information associated with data arrival in the first device;
position information of the first device;
serving cell information of the first device;
neighboring cell information of the first device; and
buffer status report (BSR) information of the first device.

100. The communication device of claim 99, wherein the sixth information indicates the capability information, and the capability information indicates one or more of:
whether the first device is capable of accelerating model inference;
storage space available for model inference in the first device;
computational capacity available for model inference in the first device;
battery power available for model inference in the first device; and
a model compression format supported by the first device.

101. The communication device of claim 99 or 100, wherein the sixth information indicates model-related information stored in the first device, wherein the stored model-related information comprises one or more of: a number of stored models; a stored model identifier; a stored model structure identifier; a number of stored model structures; and stored model module information.

102. The communication device of any one of claims 99 to 101, wherein the sending unit is configured to:
send seventh information to the first device, wherein the seventh information is associated with transmission of the sixth information.

103. The communication device of claim 102, wherein the seventh information comprises one or more of:
information indicating sending of the sixth information;
information indicating a sending manner of the sixth information; and
information indicating information content carried in the sixth information.

104. The communication device of any one of claims 79 to 103, wherein the first device is a terminal device, and the second device is a network device.

105. A communication device, comprising:
a transceiver;
a memory configured to store a program; and
a processor configured to invoke the program stored in the memory and control the transceiver to receive or send a signal, to cause the communication device to perform the method of any one of claims 1 to 26 or 27 to 52.

106. An apparatus, comprising:
a processor configured to invoke a program stored in a memory to cause the apparatus to perform the method of any one of claims 1 to 26 or 27 to 52.

107. A chip, comprising:
a processor configured to invoke a program stored in a memory to cause a device equipped with the chip to perform the method of any one of claims 1 to 26 or 27 to 52.

108. A computer-readable storage medium configured to store a program that causes a computer to perform the method of any one of claims 1 to 26 or 27 to 52.

109. A computer program product comprising a program that causes a computer to perform the method of any one of claims 1 to 26 or 27 to 52.

110. A computer program being operable with a computer to perform the method of any one of claims 1 to 26 or 27 to 52.
